# EUROPEAN PATENT APPLICATION

(11) **EP 3 567 941 A1**
(43) Date of publication of application: **13.11.2019**
(21) Application number: 17889668.4
(22) Date of filing: 26.12.2017
(51) Int. Cl.: H04W 60/04, H04W 48/00, H04W 76/20

(54) **TERMINAL DEVICE, CORE NETWORK DEVICE, AND COMMUNICATION CONTROL METHOD**

(30) Priority: 05.01.2017 JP 2017000509
(71) Applicant: Sharp Kabushiki Kaisha, Sakai City, Osaka 590-8522 (JP); FG INNOVATION COMPANY LIMITED, The Hong Kong Special Administrative Region (CN)
(72) Inventor: KAWASAKI, Yudai, Sakai City, Osaka 590-8522 (JP); ARAMOTO, Masafumi, Sakai City, Osaka 590-8522 (JP)
(74) Representative: Müller Hoffmann & Partner
(86) International application number: PCT/JP2017/046638
(87) International publication number: WO 2018/128127

(57) **Abstract**

Provided are a terminal apparatus capable of supporting various types of session continuity, a communication controller preferable for a network apparatus connectable to the terminal apparatus, a communication controller for realizing various types of session continuity, and a communication controller for determining session continuity for each of sessions. With these above, a preferable communication controller is provided for a control apparatus and a terminal apparatus included in a communication system supporting various types of session continuity.

## Description

### Technical Field

The present invention relates to a terminal apparatus, a core network apparatus, and a communication control method. This application claims priority based on JP 2017-509 filed on January 5, 2017 in Japan, the contents of which are incorporated herein in its entirety by reference.

### Background Art

The 3rd Generation Partnership Project (3GPP), which undertakes activities for standardizing recent mobile communication systems, discusses System Architecture Evolution (SAE), which is the system architecture of Long Term Evolution (LTE). The 3GPP is in the process of creating specifications for the Evolved Packet System (EPS) as a communication system for realizing an all-Internet Protocol (IP) architecture. Note that a core network constituting the EPS is called an Evolved Packet Core (EPC).

In recent years, the 3GPP also discusses next generation communication technology or system architecture of the 5thGeneration (5G) mobile communication system that is a next generation mobile communication system, where Architecture and Security for Next Generation System (NextGen) is discussed as a next generation communication technology. In NextGen, technical problems for connecting various terminals to a cellular network are extracted to standardize solutions.

For example, requirement conditions include optimization and diversification of a communication procedure for supporting a continual mobile communication service depending on a terminal supporting various access networks, optimization of a system architecture suitable for the optimization and diversification of the communication procedure, and the like.

### Citation List

### Non Patent Literature

NPL 1: 3GPP TR 23.799; Technical Specification GroupServices and System Aspects; Study on Architecture for Next Generation System; (Release 14)

### Summary of Invention

### Technical Problem

In NextGen, discussed is diversification of session management in the mobile communication service between a terminal and a network apparatus.

More specifically, the discussion concerns diversification of types of supported session continuity, with an aim to provide continual mobile communication service suitable for a terminal and a network apparatus.

However, measures for establishing a session for the terminal and the network apparatus supporting various types of session continuity, measures for realizing various types of session continuity, and the like are not made clear.

The present invention has been made in view of the above described circumstances, and has an object to provide measures for session establishment, communication controller for realizing various types of session continuity, and the like.

### Solution to Problem

A terminal apparatus according to the present invention includes: a transmission and/or reception unit configured to perform, between the terminal apparatus and an apparatus included in a core network, a PDU session establishment procedure, and a tracking area update procedure in a case that the terminal apparatus moves from a tracking area A to a tracking area B; and a controller configured to establish a PDU session, based on completion of the PDU session establishment procedure, and suspend the PDU session and further run a timer for managing a state of the PDU session, based on completion of the tracking area update procedure. The tracking area A is a tracking area included in a tracking area list held by the terminal apparatus before the tracking area update procedure is performed, and the tracking area B is a tracking area different from the tracking area A, and is a tracking area not included in the tracking area list.

A gateway according to the present invention included in a core network includes: a transmission and/or reception unit configured to perform, between the apparatus included in the core network and a terminal apparatus, a PDU session establishment procedure and a tracking area update procedure; and a controller configured to establish a PDU session between the core network and the terminal apparatus, based on completion of the PDU session establishment procedure, and suspend the PDU session and further run a timer for managing a state of the PDU session, based on completion of the tracking area update procedure.

A communication control method of a terminal apparatus according to the present invention includes, between the terminal apparatus and an apparatus included in a core network, the steps of: performing a PDU session establishment procedure; establishing a PDU session, based on completion of the PDU session establishment procedure; further performing a tracking area update procedure in a case of movement from a tracking area A to a tracking area B; suspending the PDU session, based on completion of the tracking area update procedure; and running a timer for managing a state of the PDU session. The tracking area A is a tracking area included in a tracking area list held by the terminal apparatus before the tracking area update procedure is performed, and the tracking area B is a tracking area different from the tracking area A, and is a tracking area not included in the tracking area list.

A communication control method of a gateway according to the present invention included in a core network includes, between the apparatus included in the core network and a terminal apparatus, the steps of: performing a PDU session establishment procedure; establishing a PDU session between the core network and the terminal apparatus, based on completion of the PDU session establishment procedure; performing a tracking area update procedure; suspending the PDU session, based on completion of the tracking area update procedure; and running a timer for managing a state of the PDU session.

### Advantageous Effects of Invention

According to the present invention, the terminal apparatus and each apparatus in the core network are capable of supporting various types of session continuity, and are capable of using a session supporting an appropriate type of session continuity to realize communication of various types of user data.

### Brief Description of Drawings

FIG. 1 is a diagram illustrating an overview of a mobile communication system.
FIG. 2 is a diagram illustrating a procedure associated with second UE mobility.
FIGS. 3A and 3B are diagrams illustrating examples of a configuration or the like of a core network and an access network in the mobile communication system.
FIG. 4A is a diagram illustrating an apparatus configuration of a UE.
FIGS. 5B to 5D are diagrams illustrating a storage unit of the UE.
FIG. 6A is a diagram illustrating an apparatus configuration of eNB/NR node/WAG.
FIG. 7A is a diagram illustrating an apparatus configuration of MME/CPF.
FIG. 8B is a diagram illustrating a storage unit of the MME/CPF.
FIGS. 9C and 9D are diagrams illustrating the storage unit of the MME/CPF.
FIG. 10A is a diagram illustrating an apparatus configuration of SGW/PGW/UPGW/SCEF.
FIGS. 11B to 11D are diagrams illustrating a storage unit of the SGW.
FIGS. 12B to 12E are diagrams illustrating a storage unit of the PGW/UPGW.
FIG. 13B is a diagram illustrating a storage unit of the SCEF.
FIG. 14 is a diagram illustrating an initial procedure.
FIG. 15 is a diagram illustrating a PDU session establishment procedure.
FIG. 16 is a diagram illustrating an attach procedure.
FIG. 17 is a diagram illustrating a tracking area update procedure.
FIG. 18 is a diagram illustrating a procedure associated with first UE mobility.

### Description of Embodiments

A preferred embodiment for carrying out the present invention will be described below with reference to the drawings. Note that as an example, the present embodiment describes an embodiment of a mobile communication system to which the present invention is applied.

### 1. System Overview

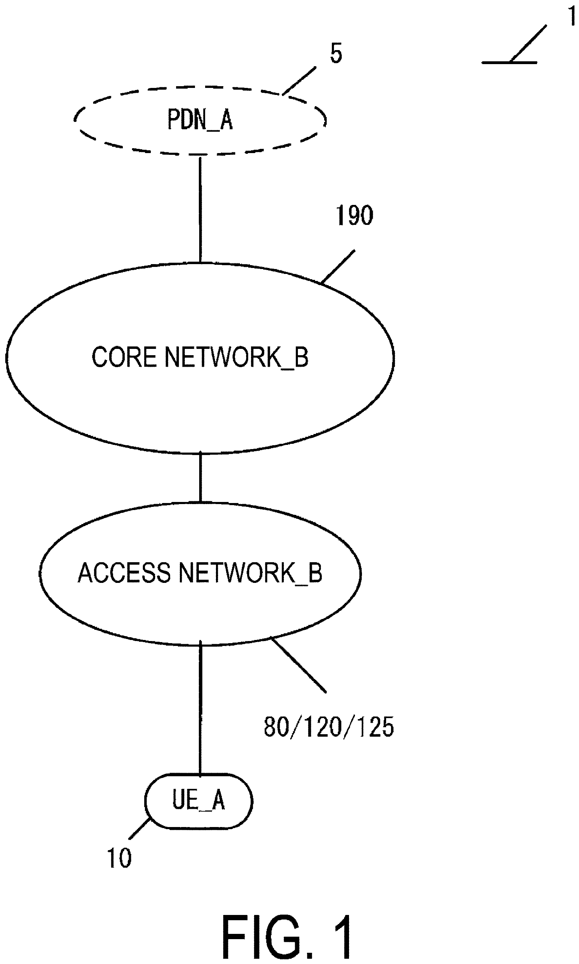

FIG. 1 is a diagram illustrating an overview of a mobile communication system according to the present embodiment. As illustrated in FIG. 1, a mobile communication system 1 includes a mobile terminal apparatus UE_A 10, an access network_B, a core network_B 190, and a PacketData Network (PDN)_A 5. Here, the UE_A 10 may be any wirelessly connectable terminal apparatus, and may be a User Equipment (UE), a Mobile Equipment (ME), a Mobile Station (MS), a Cellular Internet of Things (CIoT) terminal (CIoT UE), or the like. Furthermore, a core network may be the core network_B 190, and an access network may be the access network_B. Furthermore, the core network may be a core network apparatus. Alternatively, in the present embodiment, the core network apparatus may be each apparatus included in the core network_B 190 and/or an apparatus that performs a part or all of processing or a function of each apparatus. The access network_B may be a NextGen RAN_A 120 and/or an E-UTRAN_A 80 and/or a WLAN ANc 125.

The UE_A 10 is capable of connecting to the access network and/or the core network. Furthermore, the UE_A 10 is capable of connecting to the PDN_A 5 via the access network and/or the core network, and further transmits and/or receives user data to and/or from the PDN_A 5. Note that the user data may be data transmitted and/or received between the UE_A 10 and the PDN_A 5. Furthermore, transmission and/or reception (communication) of the user data may be performed using a Protocol Data Unit or Packet Data Unit (PDU) session, or using a Packet Data Network Connection (PDN connection). Furthermore, the communication of the user data may not be limited to Internet Protocol (IP) communication, but may be non-IP communication.

Here, the PDU session or the PDN connection (hereinafter also referred to as PDN connectivity) is connectivity established between the UE_A 10 and the PDN_A 5 for providing a PDU connectivity service to transmit and/or receive the user data between the UE_A 10 and the PDN_A 5, or the like. To be more specific, the PDU session or the PDN connection may be connectivity established between the UE_A 10 and an external gateway. Here, the external gateway may be an apparatus connecting the core network such as a Packet Data Network Gateway (PGW)_A 30, a UserPlane Gateway (UPGW)_A 130, and a Service Capability ExposureFunction (SCEF)_A 46 with the PDN_A 5.

The PDU session or the PDN connection may be a communication path established for transmitting and/or receiving the user data between the UE_A 10 and the core network and/or the PDN_A 5, or a communication path for transmitting and/or receiving the PDU. Furthermore, the PDU session or the PDN connection may be a session established between the UE_A 10 and the core network and/or the PDN_A 5, or may be a logical communication path including a transfer path such as one or multiple bearers and the like between apparatus in the mobile communication system 1. More specifically, the PDU session may be a connection established by the UE_A 10 between the UE_A 10 and the core network_B 190 and/or the external gateway, a connection established between the UE_A 10 and the UPGW_A 130, or a connection such as a Packet Data Network Connection (PDN connection).

Note that the PDN connection may be connectivity and/or a connection between the UE_A 10 and the PGW_A 30 via an evolved NodeB (eNB)_A 45 and/or a Serving Gateway (SGW)_A 35, or connectivity and/or a connection between the UE_A 10 and the SCEF_A 46 via the eNB_A 45 and/or a Mobility Management Entity (MME)_A 40. Furthermore, the PDU session may be connectivity and/or a connection between the UE_A 10 and the UPGW_A 130 via an NR node_A 122. Furthermore, the PDN connection may be identified by a PDN connection ID, and the PDU session may be identified by a PDU session ID. Furthermore, the PDN connection and the PDU session may be identified by an EPS bearer ID.

Note that the UE_A 10 can transmit and/or receive the user data to and/or from an apparatus located in the PDN_A 5 such as an application server by using the PDU session or the PDN connection. In other words, the PDU session or the PDN connection can transfer the user data transmitted and/or received between the UE_A 10 and the apparatus located in the PDN_A 5 such as an application server. Furthermore, each apparatus (the UE_A 10, apparatus in the access network, and/or apparatus in the core network) may associate one or multiple pieces of identification information with the PDU session or the PDN connection for management. Note that these pieces of identification information may include at least one of an Access Point Name (APN), a Traffic Flow Template (TFT), a session type, application identification information, identification information of the PDN_A 5, Network Slice Instance (NSI) identification information, and Dedicated Core Network (DCN) identification information, and access network identification information, or may further include other information. Furthermore, in a case that multiple PDU sessions or PDN connections are established, respective pieces of identification information associated with the PDU sessions or the PDN connections may have the same content or different contents. Furthermore, the NSI identification information is information for identifying an NSI, and hereinafter may be an NSI ID or a Slice Instance ID.

The IP communication is communication of data using the IP, and is data communication achieved through transmitting and/or receiving an IP packet which is given an IP header. Note that a payload section constituting an IP packet may contain the user data transmitted and/or received by the UE_A 10. The non-IP communication is communication not using the IP, and is data communication achieved through transmitting and/or receiving data which is not given an IP header. For example, the non-IP communication may be the data communication achieved through transmitting and/or receiving application data not given the IP packet, or may transmit and/or receive the user data transmitted and/or received by the UE_A 10 to which another header such as a MAC header and an Ethernet (trade name) frame header is given.

Furthermore, the PDN_A 5 may be a Data Network (DN) to provide a communication service to the UE_A 10. Note that the DN may be configured as a packet data service network, or configured for each service. Furthermore, the PDN_A 5 may include a connected communication terminal. Therefore, connecting with the PDN_A 5 may be connecting with the communication terminal or a server located in the PDN_A 5. Furthermore, the transmission and/or reception of the user data to and/or from the PDN_A 5 may be transmission and/or reception of the user data to and/or from the communication terminal or server located in the PDN_A 5. Note that the PDN_A 5 may be represented by the DN, or the DN may be represented by the PDN_A 5.

Furthermore, the access network is a radio network connecting with the UE_A 10 and/or the core network. The access network may be a 3GPP access network, or a non-3GPP access network. Note that the 3GPP access network may be the Evolved Universal Terrestrial Radio Access Network (E-UTRAN)_A 80 and the NextGeneration Radio Access Network (NextGen RAN)_A 120, and the non-3GPP access network may be the WLAN ANc 125. Note that the UE_A 10 may connect with the access network in order to connect to the core network, or may connect to the core network via the access network.

Furthermore, the core network is an IP mobile communication network run by a Mobile Network Operator to which the access network and/or the PDN_A 5 connects. The core network may be a core network for the mobile network operator that runs and manages the mobile communication system 1, or may be a core network for a virtual mobile network operator such as a Mobile Virtual Network Operator (MVNO) or a Mobile Virtual Network Enabler (MVNE), or a virtual mobile communication service provider. Note that the core network_B 190 may be an Evolved Packet Core (EPC) constituting an Evolved Packet System (EPS), and a NextGeneration (NextGen) Core (NGC) constituting a NextGeneration System (NextGen System (NGS)). Furthermore, the core network_B 190 may be a core network for a system providing the 5G communication service. Note that the core network_B 190 is not limited to that above described, but may be a network for providing a mobile communication service.

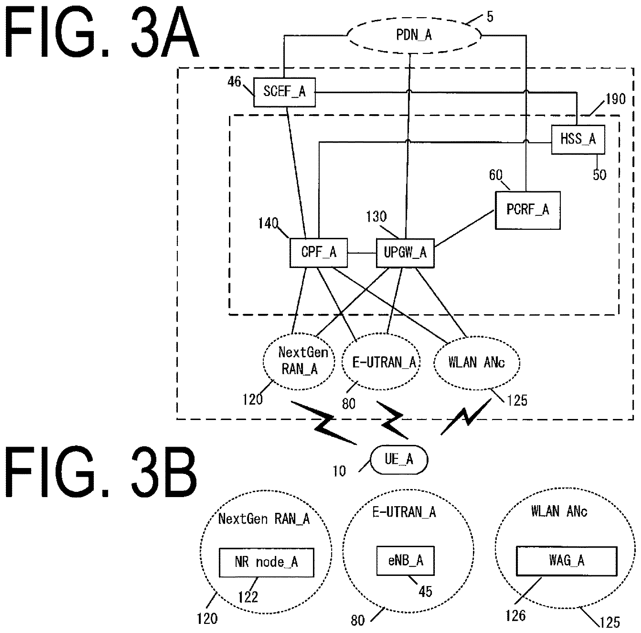

Next, a configuration example of the core network_B 190 will be described. An example of the configuration of the core network_B 190 will be described. FIGS. 3A and 3B illustrate an example of the configuration of the core network_B 190. The core network_B 190 in FIG. 3A includes an HSS_A 50, a PCRF_A 60, the User Plane Gateway (UPGW)_A 130, a Control Plane Function (CPF)_A 140, and the SCEF_A 46.

The core network_B 190 is capable of connecting to multiple radio access networks (E-UTRAN_A 80, NextGen RAN_A 120, and WLAN ANc 125). Such a radio access network may be configured to connect to multiple different access networks, or may be configured to connect to any one of the access networks. Furthermore, the UE_A 10 is capable of wirelessly connecting to the radio access network.

Furthermore, the E-UTRAN_A 80 and the NextGen RAN_A 120 can be configured as access networks connectable in a 3GPP access system. Furthermore, the WLAN access network c (WLAN ANc 125) that connects to the CPF_A 140 and the UPGW_A 130 can be configured as an access network connectable in the WLAN access system. Each apparatus will be described briefly below.

The UPGW_A 130 is an apparatus connected to the PDN_A 5, the PCRF_A 60, the CPF_A 140, the E-UTRAN 80, the NextGen RAN_A 120, and the WLAN ANc 125, and serves as a relay apparatus configured to transfer the user data by functioning as a gateway between the PDN_A 5 and/or the DN and the core network_B 190. Note that the UPGW_A 130 may serve as a gateway for the IP communication and/or the non-IP communication. Furthermore, the UPGW_A 130 may have a function to transfer the IP communication, or may have a function to convert between the non-IP communication and the IP communication. Note that multiple gateways like this may be located in the core network_B 190. Furthermore, the multiple gateways located may serve as gateways connecting the core network_B 190 with a single DN. Note that the UPGW_A 130 may have connectivity with another NF to connect to each apparatus via another NF. Note that the UPGW_A 130 may be the SGW_A 35 and/or the PGW_A 30.

The PGW_A 30 is connected to the PDN_A 5, the SGW_A 35, and the PCRF_A 60, and serves as a relay apparatus configured to transfer the user data by functioning as a gateway between the PDN_A 5 and/or the DN and the core network_B 190. Note that the PGW_A 30 may serve as a gateway for the IP communication and/or the non-IP communication.

Furthermore, the PGW_A 30 may have a function to transfer the IP communication, or may have a function to convert between the non-IP communication and the IP communication. Note that multiple gateways like this may be located in the core network_B 190. The multiple gateways located may serve as gateways connecting the core network_B 190 with a single DN.

Note that a User Plane (U-Plane) may be a communication path for transmitting and/or receiving the user data, and may include multiple bearers. Furthermore, a Control Plane (C-Plane) may be a communication path for transmitting and/or receiving a control message, and may include multiple bearers.

Furthermore, the PGW_A 30 may be connected to a UP function and a Policy function, or may be connected to the UE_A 10 via the U-Plane. Furthermore, the PGW_A 30 may be configured integrally with the UPGW_A 130.

The SGW_A 35 is connected to the PGW_A 30, the MME_A 40, and the E-UTRAN_A 80, and serves as a relay apparatus configured to transfer the user data by functioning as a gateway between the core network_B 190 and the 3GPP access network (the E-UTRAN_A 80, the NextGen RAN_A 120).

Furthermore, the SGW_A 35 may be a UP function which has a contact with the access network and transfers the user data, or may be the User Plane Gateway (UPGW)_A 130 that is a gateway for transferring the user data between the access network and the core network.

Furthermore, the CPF_A 140 is an apparatus connected to the UPGW_A 130, the E-UTRAN_A 80, the NextGen RAN_A 120, the WLAN ANc 125, the HSS_A 50, and the SCEF_A 46. The CPF_140 may be an NF having a function of the mobility management of the UE_A 10 or the like, an NF having a function of the session management of the PDU session or the like, or an NF managing one or multiple NSIs. The CPF_140 may be an NF having one or multiple of these functions. Note that the NF may be one or multiple apparatus located in the core network_B 190, a Control Plane Function or a Control Plane, Network Function (CP function) for the control information and/or the control message, or a common CP function (Common Control Plane Network Function (CPNF) (CCNF) shared between multiple NSIs. Note that the CPF_A 140 may have connectivity with another NF to connect to each apparatus via another NF. Note that the CPF_A 140 may be the MME_A 40.

The MME_A 40 is connected to the SGW_A 35, the access network, the HSS_A 50, and the SCEF_A 46, and is a control apparatus that performs location information management including mobility management of the UE_A 10 via the access network, and access control. Furthermore, the MME_A40 may include a function as a session management apparatus to manage a session established by the UE_A 10.

A plurality of such control apparatuses may be located in the core network_B 190, and for example, a location management apparatus different from the MME_A40 may be included in the core network_B 190. The location management apparatus different from the MME_A 40 may be connected with the SGW_A 35, the access network, the SCEF_A 46, and the HSS_A 50, similarly to the MME_A 40.

In a case that multiple MMEs are included in the core network_B 190, the MMEs may be connected to each other. With this configuration, a context of the UE_A 10 may be transmitted and/or received between the MMEs. In this way, the MME_A 40 is a management apparatus to transmit and/or receive the control information related to the mobility management and the session management to and/or from the UE_A 10. In other words, the MME_A 40 may be a control apparatus for a Control Plane (C-Plane; CP).

Furthermore, described above is an example in which the MME_A 40 is configured to be included in the core network_B 190. However, the MME_A 40 may be a management apparatus included in one or multiple core networks, DCNs, or NSIs, or may be a management apparatus connected to one or multiple core networks, DCNs, or NSIs. Here, multiple DCNs or NSIs may be managed by a single network operator, or by network operators different from each other.

The MME_A 40 may be a relay apparatus configured to transfer the user data by functioning as a gateway between the core network_B 190 and the access network. Note that the user data transmitted and/or received by the MME_A 40 functioning as a gateway may be small data.

Furthermore, the MME_A 40 may be an NF having a function of the mobility management of the UE_A 10 or the like, an NF having a function of the session management of the PDU session or the like, or an NF managing one or multiple NSIs. The MME_A 40 may be an NF having one or multiple of these functions. Note that the NF may be one or multiple apparatus located in the core network_B 190, a CP function (hereinafter also referred to as a Control Plane Function (CPF) or a Control Plane Network Function) for the control information and/or the control message, or a common CP function shared between multiple NSIs.

Here, the NF is a processing function included in a network. Specifically, the NF may be a function apparatus such as the MME, the SGW, the PGW, the CPF, and the UPGW, a function such as Mobility Management (MM) and Session Management (SM), or capability information. The NF may be a function apparatus to realize a single function, or a function apparatus to realize multiple functions. For example, an NF to realize the MM function and an NF to realize the SM function may be separately present, or an NF to realize both the MM function and the SM function may be present.

The SCEF_A 46 is connected to the PDN_A 5 and the CPF_A 140, or to the MME_A 40 and the HSS_A 50, and is a relay apparatus configured to transfer the user data by functioning as a gateway interfacing the PDN_A 5 and/or the DN and the core network_B 190. Note that the SCEF_A 46 may serve as a gateway for the non-IP communication. Furthermore, the SCEF_A 46 may have a function to convert between the non-IP communication and the IP communication. Multiple gateways like this may be located in the core network_B 190. Furthermore, multiple gateways connecting the core network_B 190 with a single PDN_A 5 and/or DN may also be located. Note that the SCEF_A 46 may be configured outside or inside the core network.

The HSS_A 50 is connected to the MME_A 40 and the SCEF_A 46, and is a managing node configured to manage subscriber information. The subscriber information of the HSS_A 50 is referred to during the access control performed by the MME_A 40, for example. Furthermore, the HSS_A 50 may be connected to a location management apparatus different from the MME_A 40. For example, the HSS_A 50 may be connected to the CPF_A 140.

The PCRF_A 60 is connected to the UPGW_A 130 or the PGW_A 30 and the PDN_A 5, and is configured to perform QoS management on data delivery. For example, the PCRF_A 60 manages QoS of a communication path between the UE_A 10 and the PDN_A 5. Furthermore, the PCRF_A 60 may be an apparatus to create and/or manage a Policy and Charging Control (PCC) rule used by each apparatus for transmitting and/or receiving the user data, and/or a routing rule.

The PCRF_A 60 may be a Policy function to create and/or manage a policy. More specifically, the PCRF_A 60 may be connected to the UP function.

As illustrated in FIG. 3B, each radio access network includes an apparatus to which the UE_A 10 is actually connected (such as a base station apparatus and an access point apparatus), and the like. The apparatus used in these connections can be thought of as apparatus adapted to the radio access networks.

In the present embodiment, the E-UTRAN_A 80 is an access network for Long Term Evolution (LTE) and includes the eNB_A 45. The eNB_A 45 is a radio base station to which the UE_A 10 connects through an Evolved Universal Terrestrial Radio Access (E-UTRA), and the E-UTRAN_A 80 may include one or multiple eNBs_A 45. The multiple eNBs may be connected to each other.

Furthermore, the NextGen RAN_A 120 is a 5G access network, and includes a New Radio Access Technology node (NR node)_A 122. The NR node_A 122 is a radio base station to which the UE_A 10 connects through a Next Generation Radio Access (NextGen RA), and the NextGen RAN_A 120 may include one or multiple NR nodes_A 122. Note that in a case that the NextGen RAN_A 120 includes multiple NRnodes_A 122, the NextGen RAN_A 120 may include the NR node_A 122 and an NR node_B 123. In this case, the NR node_B 123 may have the same configuration as the configuration of the NR node_A 122.

Furthermore, the NextGen RAN_A 120 may be an access network including the E-UTRA and/or the NextGen RA. In other words, the NextGen RAN_A 120 may include the eNB_A 45, the NR node_A 122, or both the eNB_A 45 and the NR node_A 122. In this case, the eNB_A 45 and the NR node_A 122 may be similar apparatuses. Therefore, the NR node_A 122 can be substituted with the eNB_A 45.

The WLAN ANc 125 is a radio LAN access network, and includes a WAG_A 126. The WLAN Access Gateway (WAG)_A 126 is a radio base station to which the UE_A 10 connects through a radio LAN access, and the WLAN ANc 125 may be include one or multiple WAGs_A 126. Furthermore, the WAG_A 126 may serve as a gateway between the core network_B 190 and the WLAN ANc 125. The WAG_A 126 may include a function unit for the radio base station, and a function unit for the gateway, which are configured as different apparatus.

Note that herein, the expression "the UE_A 10 is connected to each radio access network" is equivalent to "the UE_A 10 is connected to a base station apparatus, an access point, or the like included in each radio access network," and is equivalent to "data, signals, and the like transmitted and/or received also pass through the base station apparatus and the access point." Note that the control message transmitted and/or received between the UE_A 10 and the core network_B 190 may be the same control message, irrespective of a type of the access network. Therefore, the expression "the UE_A 10 and the core network_B 190 transmit and/or receive a message to and/or from each other via the NR node A 122" may be equivalent to "the UE_A 10 and the core network_B 190 transmit a message to each other via the eNB_A 45 and/or the WAG_A 126."

### 1.2. Configuration of Apparatus

First, a description is given of the identification information stored in each apparatus. International Mobile Subscriber Identity (IMSI) is permanent identification information of a subscriber (user), and is identification information assigned to a user using the UE. The IMSI stored by the UE_A 10, the MME_A 40/CPF_A 140, and the SGW_A 35 may be the same as the IMSI stored by the HSS_A 50.

EMM State/MM State indicates a Mobility management state of the UE_A 10 or the MME_A 40/CPF_A 140. For example, the EMM State/MM State may be an EMM-REGISTERED state (registered state) in which the UE_A 10 is registered in the network, and/or an EMM-DEREGISTERD state (deregistered state) in which the UE_A 10 is not registered in the network. The EMM State/MM State may be an ECM-CONNECTED state in which a connection is maintained between the UE_A 10 and the core network, and/or an ECM-IDLE state in which the connection is released. Note that the EMM State/MM State may be information with which a state in which the UE_A 10 is registered in the EPC and a state in which the UE_A 10 is registered in the NGC can be distinguished.

Globally Unique Temporary Identity (GUTI) is temporary identification information of the UE_A 10. The GUTI includes identification information of the MME_A 40/CPF_A 140 (Globally Unique MME Identifier (GUMMEI)), and identification information of the UE_A 10 in a specific MME _A 40/CPF_A 140 (M-Temporary Mobile Subscriber Identity (M-TMSI)). ME Identity is an ID of the UE_A 10 or the ME, and may be International Mobile Equipment Identity (IMEI) or IMEI Software Version (IMEISV), for example. MSISDN represents a basic phone number of the UE_A 10. The MSISDN stored by the MME_A 40/CPF_A 140 may be information indicated by a storage unit of the HSS_A 50. Note that the GUTI may include information for identifying the CPF_140.

MME F-TEID is information for identifying the MME_A 40/CPF_A 140. The MME F-TEID may include an IP address of the MME_A 40/CPF_A 140, a Tunnel Endpoint Identifier (TEID) of the MME_A 40/CPF_A 140, or both of them. The IP address of the MME_A 40/CPF_A 140 and the TEID of the MME_A 40/CPF_A 140 may be stored independently of each other. The MME F-TEID may be identification information for user data, or identification information for control information.

SGW F-TEID is information for identifying the SGW_A 35. The SGW F-TEID may include an IP address of the SGW_A 35, a TEID of the SGW_A 35, or both of them. The IP address of the SGW_A 35 and the TEID of the SGW_A 35 may be stored independently of each other. The SGW F-TEID may be identification information for user data, or identification information for control information.

PGW F-TEID is information for identifying the PGW_A 30/UPGW_A 130. The PGW F-TEID may include an IP address of the PGW _A 30/UPGW_A 130, a TEID of the PGW_A 30/UPGW_A 130, or both of them. The IP address of the PGW_A 30/UPGW_A 130 and the TEID of the PGW_A 30/UPGW_A 130 may be stored independently of each other. The PGW F-TEID may be identification information for user data, or identification information for control information.

eNB F-TEID is information for identifying the eNB_A45. The eNB F-TEID may include an IP address of the eNB_A 45, a TEID of the eNB_A 45, or both of them. The IP address of the eNB_A 45 and the TEID of the SGW_A 35 may be stored independently of each other. The eNB F-TEID may be identification information for user data, or identification information for control information.

The APN may be identification information for identifying the core network and an external network such as the DN. Furthermore, the APN can also be used as information for selecting a gateway such as the PGW_A 30/UPGW_A 130 connecting the core network A_90.

Note that the APN may be identification information for identifying such a gateway, or identification information for identifying an external network such as the DN. Note that in a case that multiple gateways connecting the core network and the DN are located, there may be multiple gateways that can be selected according to the APN. Furthermore, one gateway may be selected from among such multiple gateways by another scheme using identification information other than the APN.

UE Radio Access Capability is identification information indicating a radio access capability of the UE_A 10. UE Network Capability includes an algorithm of security supported by the UE_A 10 and a key derivative function. MS Network Capability is information for including, in the UE_A 10 having a function of a GERAN_A 25 and/or a UTRAN_A 20, one or multiple pieces of information necessary for an SGSN_A42. Access Restriction is registration information for access restriction. eNBAddress is an IP address of the eNB_A45. MME UE S1AP ID is information for identifying the UE_A 10 in the MME_A 40/CPF_A 140. eNB UE S1AP ID is information for identifying the UE_A 10 in the eNB_A 45.

APN in Use is an APN recently utilized. The APN in Use may be Data Network Identifier. This APN may include identification information of the network and identification information of a default operator. Furthermore, the APN in Use may be information for identifying a DN with which the PDU session is established.

Assigned Session Type is information indicating a PDU session type. The Assigned Session Type may be Assigned PDN Type. The PDU session type may be an IP, or a non-IP. Furthermore, in a case that the PDU session type is an IP, information indicating a PDN type assigned by the network may be further included. Note that the Assigned Session Type may be IPv4, IPv6, or IPv4v6.

Unless otherwise specifically described, the IP Address refers to the IP address assigned to the UE. The IP address may be an IPv4 address, an IPv6 address, or an IPv6 prefix. Note that in a case that the Assigned Session Type indicates a non-IP, an element of the IP Address may not be contained.

DN ID is identification information for identifying the core network_B 190 and an external network such as the DN. Furthermore, the DN ID can also be used as information for selecting a gateway such as the UPGW_A 130 connecting the core network_B 190.

Note that the DN ID may be identification information for identifying such a gateway, or identification information for identifying an external network such as the DN. Note that in a case that multiple gateways connecting the core network_B 190 and the DN are located, there may be multiple gateways that can be selected according to the DN ID. Furthermore, one gateway may be selected from among such multiple gateways by another scheme using identification information other than the DN ID.

Furthermore, the DN ID may be information equivalent to the APN, or different from the APN. Note that in a case that the DN ID is the information different from the APN, each apparatus may manage information indicating a correspondence relationship between the DN ID and the APN, perform a procedure to inquire the APN by using the DN ID, or perform a procedure to inquire the DN ID by using the APN.

SCEF ID is an IP address of the SCEF_A 46 used in the PDU session. Default Bearer is information acquired and/or created in establishing a PDU session, and is EPS bearer identification information for identifying a default bearer associated with the PDU session.

EPS Bearer ID is identification information of the EPS bearer. The EPS Bearer ID may be identification information for identifying Signalling Radio Bearer (SRB) and/or Control-plane Radio bearer (CRB), or identification information for identifying Data Radio Bearer (DRB). Transaction Identifier (TI) is identification information for identifying a bidirectional message flow (Transaction). Note that the EPS Bearer ID may be EPS bearer identification information for identifying a dedicated bearer. Therefore, the EPS bearer ID may be identification information for identifying the EPS bearer different from the default bearer. The TFT indicates all the packet filters associated with the EPS bearer. The TFT is information for identifying some pieces of the transmitted and/or received user data, and thus, the UE_A 10 uses the EPS bearer associated with the TFT to transmit and/or receive the user data identified by the TFT. In other words, the UE_A 10 uses Radio Bearer (RB) associated with the TFT to transmit and/or receive the user data identified by the TFT. The TFT may associate the user data such as the transmitted and/or received application data with an appropriate transfer path, and may be identification information for identifying the application data. The UE_A 10 may use the default bearer to transmit and/or receive the user data which cannot be identified by the TFT. The UE_A 10 may store in advance the TFT associated with the default bearer.

The Default Bearer is EPS bearer identification information for identifying a default bearer associated with a PDU session. Note that the EPS bearer may be a logical communication path established between the UE_A 10 and the PGW_A 30/UPGW_A 130, or a communication path configuring a PDN connection/PDU session. Furthermore, the EPS bearer may be a default bearer, or a dedicated bearer. Furthermore, the EPS bearer may include an RB established between the UE_A 10 and the base station and/or the access point in the access network. Furthermore, the RB and the EPS bearer may be associated with each other on a one-to-one basis. Therefore, identification information of the RB may be associated with the identification information of the EPS bearer on a one-to-one basis, or may be the same identification information as the identification information of the EPS bearer. Note that the RB may be an SRB and/or a CRB, or a DRB. The Default Bearer may be information that the UE_A 10 and/or the SGW_A 35 and/or the PGW_A 30/UPGW_A 130 acquire from the core network in establishing a PDU session. Note that the default bearer is an EPS bearer first established in the PDN connection/PDU session, and is such an EPS bearer that only one bearer can be established in one PDN connection/PDU session. The default bearer may be an EPS bearer that can be used to communicate user data not associated with the TFT. The dedicated bearer is an EPS bearer established after the default bearer is established in the PDN connection/PDU session, and is such an EPS bearer that multiple bearers can be established in one PDN connection/PDU session. The dedicated bearer is an EPS bearer that can be used to communicate user data not associated with the TFT.

User Identity is information for identifying a subscriber. The User Identity may be an IMSI, or an MSISDN. Furthermore, the User Identity may also be identification information other than an IMSI or an MSISDN. Serving Node Information is information for identifying the MME_A 40/CPF_A 140 used in a PDU session, and may be an IP address of the MME_A 40/CPF_A 140.

eNB Address is an IP address of the eNB_A 45. eNB ID is information for identifying the UE in the eNB_A 45. MME Address is an IP address of the MME_A 40/CPF_A 140. MME ID is information for identifying the MME_A 40/CPF_A 140. NR node Address is an IP address of the NR node_A 122. NR node ID is information for identifying the NR node_A 122. WAG Address is an IP address of the WAG_A 126. WAGID is information for identifying the WAG_A 126.

The configuration of each apparatus will be described below. Note that some or all of apparatus described below and functions of units in the apparatus may operate on physical hardware, or logical hardware which is virtually configured on general-purpose hardware.

### 1.2.1. Configuration of UE

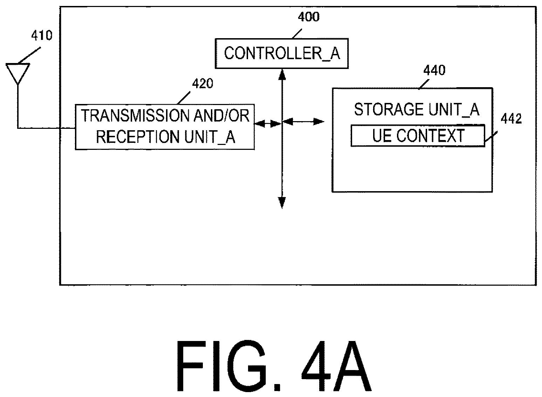

FIG. 4A illustrates an apparatus configuration of the UE_A 10. As illustrated in the drawing, the UE_A 10 includes a transmission and/or reception unit_A 420, a controller_A 400, and a storage unit_A 440. The transmission and/or reception unit_A 420 and the storage unit_A 440 are connected to the controller_A 400 via a bus. The controller_A 400 is a function unit to control the UE_A 10. The controller_A 400 implements various types of processing by reading out various programs stored in the storage unit_A 440 and performing the programs.

The transmission and/or reception unit_A 420 is a function unit through which the UE_A 10 connects to the base station and/or the access point in the access network to connect to the access network. An external antenna_A 410 is connected to the transmission and/or reception unit_A 420. In other words, the transmission and/or reception unit_A 420 is a function unit through which the UE_A 10 connects to the base station and/or the access point in the access network. Furthermore, the transmission and/or reception unit_A 420 is a transmission and/or reception function unit through which the UE_A 10 transmits and/or receives the user data and/or the control information to and/or from the base station and/or the access point in the access network.

The storage unit_A 440 is a function unit configured to store programs, data, and the like necessary for each operation of the UE_A 10. The storage unit_A 440 includes, for example, a semiconductor memory, a Hard Disk Drive (HDD), or the like. The storage unit_A 440 may store at least identification information and/or control information and/or a flag and/or a parameter included in a control message which is transmitted and/or received in a communication procedure described later. As illustrated in the drawing, the storage unit_A440 stores a UE context 442. Hereinafter, information elements stored in the storage unit_A 440 will be described. Note that the UE context 442 may include a UE context used to connect to the core network_B 190 and a UE context used to connect to the core network_B 190. Furthermore, the UE context used to connect to the core network _B 190 and the UE context used to connect to the core network_B 190 may be stored together or separately.

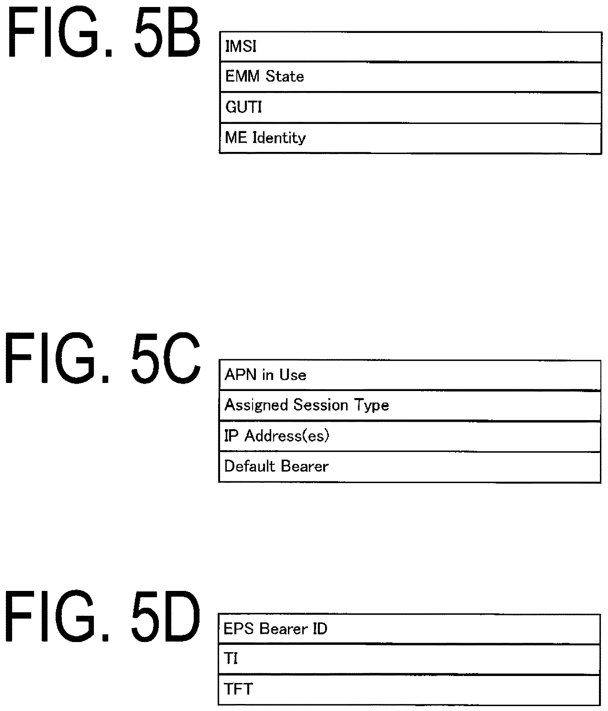

First, FIG. 5B illustrates information elements included in the UE context stored for each UE. As illustrated in the drawing, the UE context stored for each UE includes IMSI, EMMState, GUTI, and ME Identity. Next, FIG. 5C illustrates the UE context for each PDU session or PDN connection stored for each PDU session or PDN connection. As illustrated in the drawing, the UE context for each PDU session includes APN in Use, Assigned Session Type, IP Address(es), and Default Bearer.

FIG. 5D illustrates the UE context for each bearer stored in the storage unit of the UE. As illustrated in the drawing, the UE context for each bearer includes EPS Bearer ID, TI, and TFT.

### 1.2.2. Configuration of eNB/NR node/WAG

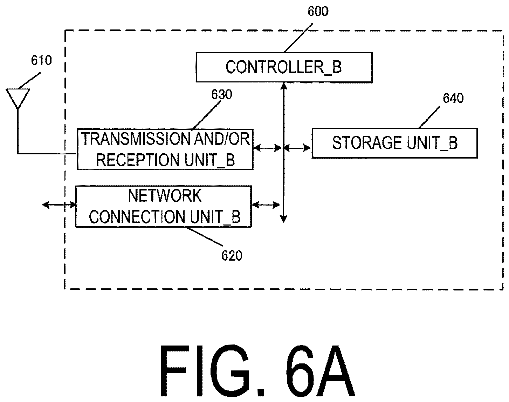

A configuration of the eNB_A 45, the NR node_A 122, and the WAG_A 126 will be described below. FIG. 6A illustrates an apparatus configuration of the eNB_A 45, the NR node_A 122, and the WAG_A 126. As illustrated in the drawing, the eNB_A 45, the NR node_A 122, and the WAG_A 126 include a network connection unit_B 620, a transmission and/or reception unit_B 630, a controller_B 600, and a storage unit_B 640. The network connection unit_B 620, the transmission and/or reception unit_B 630, and the storage unit_B 640 are connected to the controller_B 600 via a bus.

The controller_B 600 is a function unit for controlling the eNB_A45. The controller_B 600 implements various types of processing by reading out various programs stored in the storage unit_B 640 and performing the programs.

The network connection unit_B 620 is a function unit through which the eNB_A 45, the NR node_A 122, and the WAG_A 126 connect to the MME_A 40 and/or the SGW_A 35. Furthermore, the network connection unit_B 620 is a transmission and/or reception unit through which the eNB_A 45, the NRnode_A 122, and the WAG_A 126 transmit and/or receive the user data and/or the control information to and/or from the MME_A 40 and/or the SGW_A 35.

The transmission and/or reception unit_B 630 is a function unit through which the eNB_A 45, the NR node_A 122, and the WAG_A 126 connect to the UE_A 10. Furthermore, the transmission and/or reception unit_B 630 is a transmission and/or reception function unit for transmitting and/or receiving the user data and/or the control information to and/or from the UE_A 10. An external antenna _B 610 is connected to the transmission and/or reception unit_B 630.

The storage unit_B 640 is a function unit for storing programs, data, and the like necessary for each operation of the eNB_A 45, the NR node_A 122, and the WAG_A 126. The storage unit_B 640 includes, for example, a semiconductor memory, an HDD, or the like. The storage unit_B 640 may store at least identification information and/or control information and/or a flag and/or a parameter included in a control message which is transmitted and/or received in a communication procedure described later. The storage unit_B 640 may store these pieces of information as the contexts for each UE_A 10.

### 1.2.3. Configuration of MME/CPF

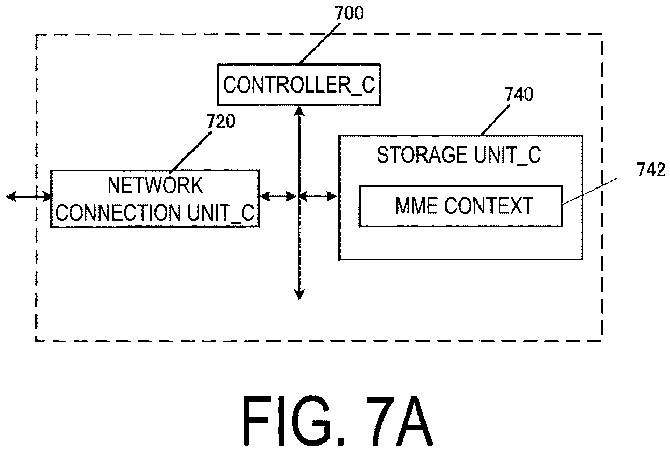

A configuration of the MMF_A 40 and the CPF_140 will be described below. FIG. 7A illustrates an apparatus configuration of the MME_A40 and the CPF_140. As illustrated in the drawing, the MME_A 40 and the CPF_140 include a network connection unit_C 720, a controller_C 700, and a storage unit_C 740. The network connection unit_C 720 and the storage unit_C 740 are connected to the controller_C 700 via a bus. Note that functions of these units may operate on physical hardware, or logical hardware which is virtually configured on general-purpose hardware.

The controller_C 700 is a function unit for controlling the MME_A 40 and the CPF_140. The controller_C 700 implements various types of processing by reading out various programs stored in the storage unit_C 740 and performing the programs.

The network connection unit_C 720 is a function unit through which the MME_A 40 connects to the base station in the access network and/or the access point in the access network and/or the SCEF_A 46 and/or the HSS_A 50 and/or the SGW_A 35. Furthermore, the network connection unit_C 720 is a transmission and/or reception unit through which the MME_A 40 transmits and/or receives the user data and/or the control information to and/or from the base station in the access network and/or the access point in the access network and/or the SCEF_A 46 and/or the HSS_A 50 and/or the SGW_A 35.

Furthermore, the network connection unit_C 720 is a function unit through which the CPF_140 connects to the base station in the access network and/or the access point in the access network and/or the SCEF_A 46 and/or the HSS_A 50 and/or the UPGW_A 130. Furthermore, the network connection unit C 720 is a transmission and/or reception unit through which the MME_A 40 transmits and/or receives the user data and/or the control information to and/or from the base station in the access network and/or the access point in the access network and/or the SCEF_A 46 and/or the HSS_A 50 and/or the UPGW_A 130.

The storage unit_C 740 is a function unit for storing programs, data, and the like necessary for each operation of the MME_A40 and the CPF_140. The storage unit_C 740 includes, for example, a semiconductor memory, an HDD, or the like. The storage unit_C 740 may store at least identification information and/or control information and/or a flag and/or a parameter included in a control message which is transmitted and/or received in a communication procedure described later.

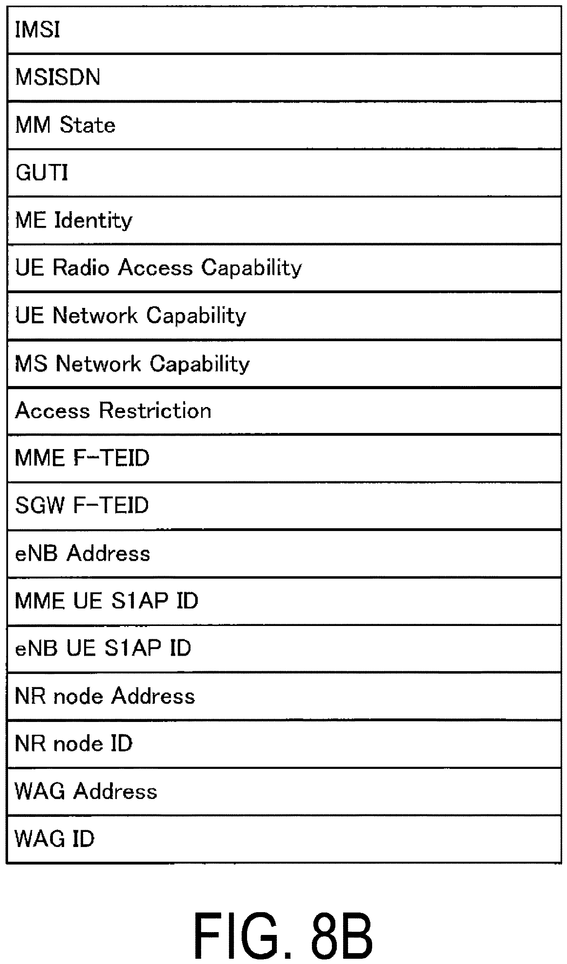

As illustrated in the drawing, the storage unit_C 740 stores an MME context 742. Hereinafter, information elements stored in the storage unit_C 740 will be described. Note that the MME context may be a context stored by the CPF_140. FIG. 8B illustrates information elements included in the UE context stored for each UE. As illustrated in the drawing, the MME context stored for each UE includes one or multiple pieces of IMSI, MSISDN, MM State, GUTI, ME Identity, UERadio Access Capability, UE Network Capability, MS Network Capability, Access Restriction, MME F-TEID, SGW F-TEID, eNB Address, MMEUE S1AP ID, eNB UE S1AP ID, NR node Address, NR node ID, WAG Address, and WAG ID.

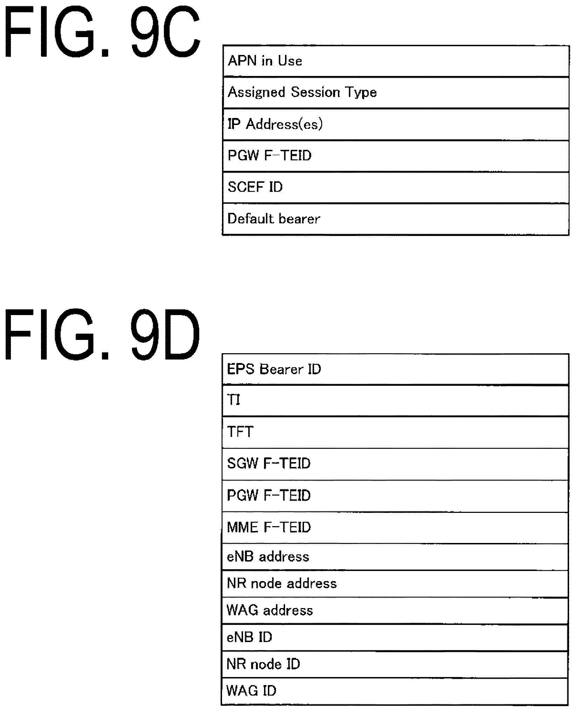

Next, FIG. 9C illustrates the MME context for each PDU session or PDN connection stored for each PDU session or PDN connection. As illustrated in the drawing, the MME context for each PDU session includes APN in Use, Assigned Session Type, IP Address(es), PGW F-TEID, SCEF ID, and Default bearer.

FIG. 9D illustrates the MME context for each bearer stored for each bearer. As illustrated in the drawing, the MME context stored for each bearer includes one or multiple pieces of EPS Bearer ID, TI, TFT, SGW F-TEID, PGW F-TEID, MME F-TEID, eNB Address, NR node Address, WAG Address, eNB ID, NRnode ID, and WAG ID. Here, the information elements included in the MME context illustrated in FIG. 8B and FIGS. 9C and 9D may be included in either the MM context or the EPS bearer context and stored.

### 1.2.4. Configuration of SGW

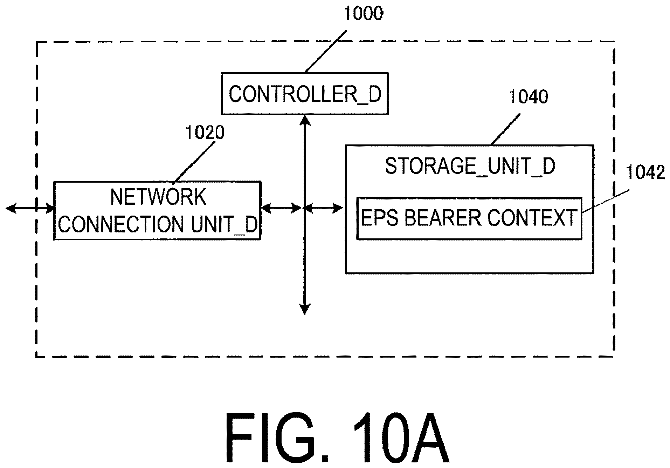

FIG. 10A illustrates an apparatus configuration of the SGW_A 35. As illustrated in the drawing, the SGW_A 35 includes a network connection unit_D 1020, a controller_D 1000, and a storage unit_D 1040. The network connection unit_D 1020 and the storage unit_D 1040 are connected to the controller_D 1000 via a bus.

The controller_D 1000 is a function unit for controlling the SGW_A 35. The controller_D 1000 implements various types of processing by reading out various programs stored in the storage unit_D 1040 and performing the programs.

The network connection unit_D 1020 is a function unit through which the SGW_A 35 connects to the base station and/or the access point in the access network and/or the MME_A 40 and/or the PGW_A 30 and/or the SGSN_A 42. Furthermore, the network connection unit_D 1020 is a transmission and/or reception unit through which the SGW_A 35 transmits and/or receives the user data and/or the control information to and/or from the base station and/or the access point in the access network and/or the MME_A 40 and/or the PGW_A 30 and/or the SGSN_A 42.

The storage unit_D 1040 is a function unit for storing programs, data, and the like necessary for each operation of the SGW_A 35. The storage unit_D 1040 includes, for example, a semiconductor memory, an HDD, or the like. The storage unit_D 1040 may store at least identification information and/or control information and/or a flag and/or a parameter included in a control message which is transmitted and/or received in a communication procedure described later.

As illustrated in the drawing, the storage unit_D 1040 stores an EPS bearer context 1042. Note that the EPS bearer context 1042 includes an EPS bearer context stored for each UE, an EPS bearer context stored for each PDU session, and an EPS bearer context stored for each bearer.

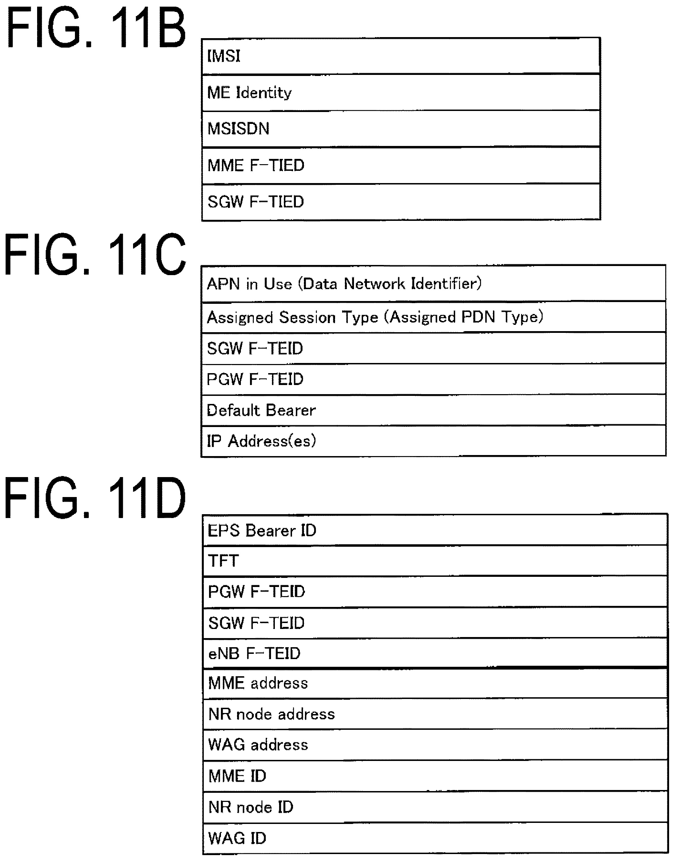

First, FIG. 11B illustrates information elements of the EPS bearer context stored for each UE. As illustrated in the drawing, the EPS bearer context stored for each UE includes IMSI, MEIdentity, MSISDN, MME F-TEID, and SGW F-TEID.

Furthermore, the EPS bearer context includes an EPS bearer context for each PDU session stored for each PDU session. FIG. 11C illustrates the EPS bearer context for each PDU session. As illustrated in the drawing, the EPS bearer context for each PDU session includes APN in Use, Assigned Session Type, SGW F-TEID, PGW F-TEID, Default Bearer, and IP Address(es).

Furthermore, the EPS bearer context includes an EPS bearer context for each bearer. FIG. 11D illustrates the EPS bearer context for each bearer. As illustrated in the drawing, the EPS bearer context for each bearer includes one or multiple pieces of EPS Bearer ID, TFT, PGW F-TEID, SGWF-TEID, eNB F-TEID, MME Address, NR node Address, WAG Address, MME ID, NR node ID, and WAGID.

### 1.2.5. Configuration of PGW/UPGW

FIG. 10A illustrates an apparatus configuration of the PGW_A 30 and the UPGW_A 130. As illustrated in the drawing, the PGW_A 30 and the UPGW_A 130 include a network connection unit_D 1020, a controller_D 1000, and a storage unit_D 1040. The network connection unit D 1020 and the storage unit_D 1040 are connected to the controller_D 1000 via a bus. Note that functions of these units may operate on physical hardware, or logical hardware which is virtually configured on general-purpose hardware.

The controller_D 1000 is a function unit for controlling the PGW_A 30. The controller_D 1000 implements various types of processing by reading out various programs stored in the storage unit_D 1040 and performing the programs.

The network connection unit_D 1020 is a function unit through which the PGW_A 30 connects to the SGW_A 35 and/or the PCRF_A 60 and/or an ePDG_A 65 and/or a AAA_A 55 and/or a TWAG_A 74 and/or the PDN_A 5. The network connection unit_D 1020 is a transmission and/or reception unit through which the PGW_A 30 transmits and/or receives the user data and/or the control information to and/or from the SGW_A 35 and/or the PCRF_A 60 and/or the ePDG_A 65 and/or the AAA_A 55 and/or the TWAG_A 74 and/or the PDN_A 5.

Furthermore, the network connection unit_D 1020 is a function unit through which the UPGW_A 130 connects to the PCRF_A 60 and/or the UPGW_A 130 and/or the PDN_A 5. The network connection unit_D 1020 is a transmission and/or reception unit through which the PGW_A 30 transmits and/or receives the user data and/or the control information to and/or from the SGW_A 35 and/or the PCRF_A 60 and/or the ePDG_A 65 and/or the AAA_A 55 and/or the TWAG_A 74 and/or the PDN_A 5.

The storage unit_D 1040 is a function unit for storing programs, data, and the like necessary for each operation of the PGW_A 30. The storage unit_D 1040 includes, for example, a semiconductor memory, an HDD, or the like. The storage unit_D 1040 may store at least identification information and/or control information and/or a flag and/or a parameter included in a control message which is transmitted and/or received in a communication procedure described later.

As illustrated in the drawing, the storage unit_D 1040 stores an EPS bearer context 1042. Note that the EPS bearer context 1042 may include an EPS bearer context stored for each UE, an EPS bearer context stored for each APN, an EPS bearer context stored for each PDU session or PDN connection, and an EPS bearer context stored for each bearer, which may be separately stored in the EPS bearer context 1042. Furthermore, the EPS bearer context may be a context stored by the UPGW_A 130.

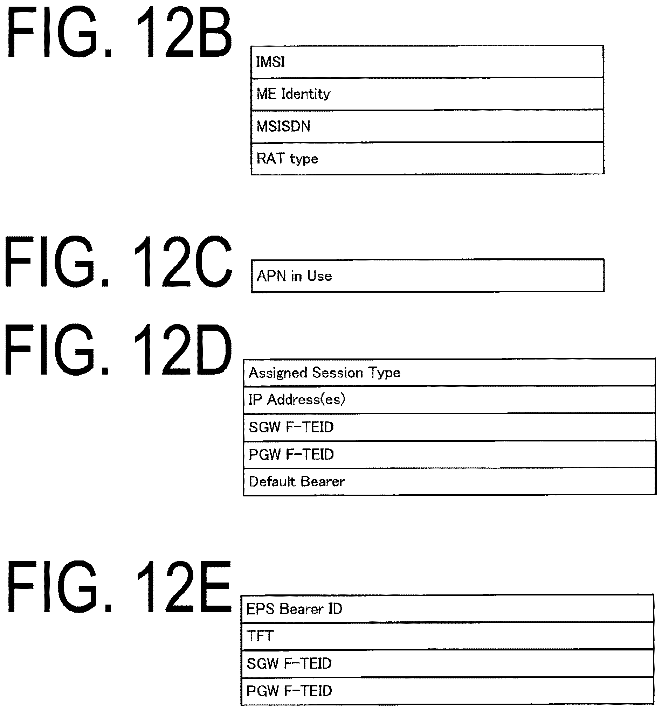

FIG. 12B illustrates information elements included in the EPS bearer context stored for each UE. As illustrated in the drawing, the EPS bearer context stored for each UE includes IMSI, MEIdentity, MSISDN, and RAT type.

Next, FIG. 12C illustrates the EPS bearer context stored for each APN. As illustrated in the drawing, the EPS bearer context stored for each APN of the storage unit of the PGW includes APN in use. Note that the EPS bearer context stored for each APN may be stored for each Data Network Identifier.

FIG. 12D illustrates the EPS bearer context for each PDU session or PDN connection stored for each PDU session or PDN connection. As illustrated in the drawing, the EPS bearer context for each PDU session or PDN connection includes Assigned Session Type, IP Address (es), SGW F-TEID, PGW F-TEID, and Default Bearer.

Furthermore, FIG. 12E illustrates the EPS bearer context stored for each EPS bearer. As illustrated in the drawing, the EPS bearer context includes EPS Bearer ID, TFT, SGWF-TEID, and PGW F-TEID.

### 1.2.6. Configuration of SCEF

FIG. 10A illustrates an apparatus configuration of the SCEF_A46. As illustrated in the drawing, the SCEF_A 46 includes a network connection unit_D 1020, a controller_D 1000, and a storage unit_D 1040. The network connection unit_D 1020 and the storage unit_D 1040 are connected to the controller_D 1000 via a bus.

The controller_D 1000 is a function unit for controlling the SCEF_A 46. The controller _D 1000 implements various types of processing by reading out various programs stored in the storage unit_D 1040 and performing the programs. The network connection unit_D 1020 is a function unit through which the SCEF_A 46 connects to the core network_B 190. In other words, the network connection unit D 1020 is a function unit through which the SCEF_A 46 connects to the MME_A 40. Furthermore, the network connection unit_D 1020 is a transmission and/or reception unit through which the SCEF_A 46 transmits and/or receives the user data and/or the control information to and/or from the MME_A 40.

The storage unit_D 1040 is a function unit for storing programs, data, and the like necessary for each operation of the SCEF_A 46. The storage unit_D 1040 includes, for example, a semiconductor memory, an HDD, or the like. The storage unit_D 1040 may store at least identification information and/or control information and/or a flag and/or a parameter included in a control message which is transmitted and/or received in a communication procedure described later.

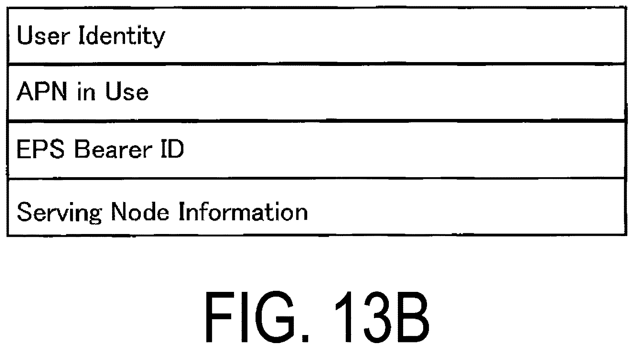

As illustrated in the drawing, the storage unit D_1040 stores an EPS bearer context 1042. Hereinafter, information elements stored in the storage unit_D 1040 will be described. FIG. 13B illustrates information elements included in the EPS bearer context. As illustrated in the drawing, the EPS bearer context includes User Identity, APN in Use, EPS Bearer ID, and Serving Node Information.

### 1.3. Description of Initial Procedure

Next, before describing detailed processes of initial procedure in the present embodiment, in order to avoid redundant descriptions, terminology specific to the present embodiment and primary identification information used in each procedure will be described beforehand.

In the present embodiment, the network is the access network and/or the core network_B 190 and/or the PDN_A 5. The network may indicate any apparatus included in the access network and/or the core network_B 190 and/or the PDN_A 5. Specifically, the expression "the network performs transmission and/or reception of a message and/or performs a procedure" means that "an apparatus in the network performs transmission and/or reception of a message and/or performs a procedure."

A tracking area in the present embodiment is one or multiple ranges which the core network manages and which can be represented by the location information of the UE_A 10. The tracking area may include multiple cells. Furthermore, the tracking area may be a range in which a control message such as paging is broadcast, or a range in which the UE_A 10 can move without performing a handover procedure. Furthermore, the tracking area may be a routing area, a location area, or those similar to them. The tracking area hereinafter may be Tracking Area (TA).

A TA list in the present embodiment is a list including one or multiple TAs assigned to the UE_A 10 by the network. Note that while the UE_A 10 is moving within one or multiple TAs included in the TA list, the UE_A 10 may be able to move without performing a tracking area update procedure. In other words, for the UE_A 10, the TA list may be an information group indicating an area in which the UE_A 10 can move without performing the tracking area update procedure.

Mobility of the UE_A 10 across TAs in the present embodiment indicates that the UE_A 10 moves to a TA that is different from a TA to which the UE_A 10 is currently connected. In other words, mobility of the UE_A 10 across TAs may indicate that the UE_A 10 has entered a TA that is different from a TA to which the UE_A 10 is currently connected. Note that the TA that is different from a TA to which the UE_A 10 is currently connected may be a TA that is not included in the TA list currently stored by the UE_A 10. Furthermore, mobility of the UE_A 10 across TAs may include re-registration of location information and/or performing Session Continuity and/or Service Continuity by switching of an established communication path, based on the fact that the UE_A 10 has entered a TA that is different from a TA to which the UE_A 10 is currently connected.

A first timer in this embodiment is a timer for indicating expiration time of a suspended PDU session. Each apparatus may release the suspended PDU session, based on expiration of the first timer.

Note that timing of starting the first timer may be time at which a PDU session is suspended, time at which the UE_A 10 enters a new TA, and time at which a tracking area update procedure, which is performed due to the fact that the UE_A 10 has entered a new TA, is completed.

In a case that the UE_A 10 returns to a TA to which the UE_A 10 was previously connected while the first timer is run, or in a case that a tracking area update procedure, which is performed due to the fact that the UE_A 10 has returned to a TA to which the UE_A 10 was previously connected, is completed, the suspended PDU session may be resumed. In this case, running of the first timer may be stopped, or the first timer may be reset. Note that the TA to which the UE_A 10 was previously connected may be a TA that was included in the TA list held by the UE_A 10 before the PDU session was suspended.

A first-type PDU session in the present embodiment is a PDU session released at the time of mobility of the UE_A 10 across TAs. In other words, the first-type PDU session may be a PDU session in which session continuity is not performed. Furthermore, the first-type PDU session may include a bearer released at the time of mobility of the UE_A 10 across TAs.

Note that release of the first-type PDU session may be performed based on entry of the UE_A 10 into a different TA, may be performed based on performance of a tracking area update procedure performed after the UE_A 10 has entered a different TA, or may be performed based on performance of another procedure performed after the tracking area update procedure. Note that timing of releasing the first-type PDU session is not limited to the timing described above.

Note that release of the PDU session may be individually performed by each apparatus without transmitting and/or receiving a control message among the each apparatus, or may be implemented by performing a procedure for releasing a PDU session and/or a bearer and/or a procedure for releasing each context.

Furthermore, in the present embodiment, the expression "a PDU session is released" may mean that "a bearer associated with a PDU session is released," and also that "a context associated with a PDU session and/or a bearer is released."

A second-type PDU session in the present embodiment is a PDU session suspended or resumed at the time of mobility of the UE_A 10 across TAs. In other words, the second-type PDU session may be a PDU session in which Session Continuity is not performed; however, the second-type PDU session may be a PDU session that can be restored to a previous state under a condition that the UE_A 10 returns back to a previous TA, for example. Furthermore, the second-type PDU session may include a bearer suspended or resumed at the time of mobility of the UE_A 10 across TAs.

Note that suspension and/or resuming of the second-type PDU session may be performed based on entry of the UE_A 10 into a different TA, may be performed based on performance of a tracking area update procedure performed after the UE_A 10 has entered a different TA, or may be performed based on performance of another procedure performed after the tracking area update procedure. Note that timing of suspending or resuming the second-type PDU session is not limited to the timing described above.

Furthermore, the second-type PDU session may be released, based on expiration of the first timer. In other words, in a case that the first timer expires while the second-type PDU session is suspended, each apparatus may release the suspended PDU session, or may release a context related to the suspended PDU session.

Note that suspension and/or resuming of the PDU session may be individually performed by each apparatus without transmitting and/or receiving a control message to and/or from apparatus, or may be implemented by performing a procedure for suspending a PDU session and/or a bearer or a procedure for resuming a PDU session and/or a bearer.

Furthermore, in the present embodiment, the expression "a PDU session is suspended" may mean that "a bearer associated with a PDU session is suspended," and also that "a state transitions to a state in which transmission and/or reception of user data using a PDU session and/or a bearer is not enabled while a context associated with a PDU session and/or a bearer is maintained."

Furthermore, in the present embodiment, the expression "a PDU session is resumed" may mean that "a bearer associated with a PDU session is resumed," and also that "a state transitions to a state in which transmission and/or reception of user data using a PDU session and/or a bearer is enabled by using a maintained context associated with a PDU session and/or a bearer."

A default-type PDU session in the present embodiment is a PDU session established in a case that each apparatus does not transmit and/or receive identification information indicating a type of a PDU session to be established in a PDU session establishment procedure. A type of the default-type PDU session may be determined according to a policy such as a UE policy and an operator policy, or may be configured in the UE_A 10 in advance. Furthermore, the default-type PDU session may be a first PDU session, a second PDU session, or a third PDU session. Note that determination of the default-type PDU session is not limited to the determination described above.

The default-type PDU session in the present embodiment is a PDU session established in a case that each apparatus does not transmit and/or receive identification information indicating a type of a PDU session to be established in a procedure of establishing a PDU session. A type of the default-type PDU session may be determined according to a policy such as a UE policy and an operator policy, or may be configured in the UE_A 10 in advance. Furthermore, the default-type PDU session may be a first PDU session, a second PDU session, or a third PDU session. Note that determination of the default-type PDU session is not limited to the determination described above.

A first state in the present embodiment is a state in which the procedure for connection and registration of the UE_A 10 to and in the core network_B 190 has been completed, and each apparatus has established the PDU session. Note that, for each apparatus, the procedure for registering the UE_A 10 in the core network_B 190 and the procedure for establishing the PDU session may be performed either simultaneously or separately.

Furthermore, the first state in the present embodiment may be a state in which each apparatus establishes the PDU session for the core network_B 190. More specifically, the first state may be a state in which each apparatus establishes the PDU session between the UE_A 10 and the UPGW_A 130 via the NRnode_A 122.

Furthermore, the first state may be a state in which mobility of the UE_A 10 across TAs has been performed, or a state in which the PDU session and/or the bearer established due to the mobility of the UE_A 10 across TAs has been maintaining session continuity or has been resumed. Note that the first state is not limited to those states described above.

A second state in the present embodiment may be a state in which the tracking area update procedure for updating location registration information of the UE_A 10 has been completed. Note that a trigger for the tracking area update procedure may be the fact that the UE_A 10 has entered a different tracking area, for example. Furthermore, the second state may be a state in which each apparatus establishes only an appropriate PDU session, based on performance of the tracking area update procedure.

Furthermore, the second state may be a state in which mobility of the UE_A 10 across TAs has been performed, or a state in which the established PDU session and/or the established bearer has been released or has been suspended due to the mobility of the UE_A 10 across TAs. Note that the second state is not limited to those states described above.

The Network Slice Instance (NSI) in the present embodiment is an entity of each of one or multiple Network Slices configured in the core network_B 190. The NSI in the present embodiment may include a virtual Network Function (NF) generated using a Network Slice Template (NST). Here, the NST is associated with a resource request for providing a required communication service or capability, and is a logical expression of one or multiple Network Functions (NFs).

Specifically, the NSI may be an aggregation including multiple NFs in the core network_B 190. The NSI may be a logical network configured to classify the user data delivered through a service or the like. The network slice may include at least one or more NFs. The NF included in the network slice may be or may not be an apparatus shared by another network slice.

The UE can be assigned to one or multiple network slices, based on UE usage type and/or one or multiple network slice type IDs and/or registration information such as one or multiple NS IDs and/or the APN.

Next, the identification information in the present embodiment will be described. 1st identification information in the present embodiment is capability information of the UE_A 10 indicating support of the first-type PDU session. The 1st identification information may be information indicating whether or not the UE_A 10 supports the first-type PDU session.

2nd identification information in the present embodiment is capability information of the UE_A 10 indicating support of the second-type PDU session. The 2nd identification information may be information indicating whether or not the UE_A 10 supports the second-type PDU session.

3rd identification information in the present embodiment is capability information of the UE_A 10 indicating support of a third-type PDU session. The 3rd identification information may be information indicating whether or not the UE_A 10 supports the third-type PDU session.

4th identification information in the present embodiment is information indicating a type of a PDU session requested by the UE_A 10 to establish. As types of the PDU session, there may be a first-type PDU session, a second-type PDU session, and a third-type PDU session. Note that the types of the PDU session are not limited to the types described above. The 4th identification information may include one or more pieces of identification information out of 5th identification information to 7th identification information, or may be configured as an independent piece of identification information similarly to the 5th identification information to the 7th identification information.

And/or, the 4th identification information may be information for requesting the network to transmit 31st identification information and/or 32nd identification information (described later) in the tracking area update procedure. Furthermore, the 4th identification information may be information for requesting the network to transmit, in the tracking area update procedure, any piece of identification information out of 33rd identification information to 36th identification information that corresponds to a type of a PDU session indicated by the 4th identification information.

Furthermore, the 4th identification information, and the capability information indicating support of establishment and/or use of a PDU session of a type indicated by the 4th identification information may be a single piece of identification information. In other words, the 4th identification information together with any one piece of identification information out of the 1st identification information to the 3rd identification information may be a single piece of identification information including significance of each of the pieces of identification information. Therefore, in a case that the present embodiment has description that the 4th identification information indicates a type of the first-type PDU session and that the 4th identification information and the 1st identification information are transmitted or included in a control message, the 4th identification information and the 1st identification information may be transmitted or included in the control message as a single piece of identification information including significance of both the two pieces of identification information.

In a case that the present embodiment has description that the 4th identification information indicates a type of the second-type PDU session and that the 4th identification information and the 2nd identification information are transmitted or included in a control message, the 4th identification information and the 2nd identification information may be transmitted or included in the control message as a single piece of identification information including significance of both the two pieces of identification information.

In a case that the present embodiment has a description where the 4th identification information indicates a type of the third-type PDU session and that the 4th identification information and the 3rd identification information are transmitted or included in a control message, the 4th identification information and the 3rd identification information may be transmitted or included in the control message as a single piece of identification information including significance of both the two pieces of identification information.

5th identification information in the present embodiment is request information of the UE_A 10 indicating a request for establishment and/or use of the first-type PDU session. The 5th identification information may be information indicating whether or not the UE_A 10 requests establishment and/or use of the first-type PDU session.

And/or, the 5th identification information may be information for requesting the network to transmit the 31st identification information and/or the 32nd identification information (described later) in the tracking area update procedure. Furthermore, the 5th identification information may be information for requesting the network to transmit 33rd identification information in the tracking area update procedure.

Note that the 5th identification information and the 1st identification information may be a single piece of identification information including significance of each of the pieces of identification information. Therefore, in a case that the present embodiment has a description where the 5th identification information and the 1st identification information are transmitted or included in a control message, the two pieces of identification information may be transmitted or included in the control message as a single piece of identification information including significance of both the two pieces of identification information.

6th identification information in the present embodiment is request information of the UE_A 10 indicating a request for establishment and/or use of the second-type PDU session. The 6th identification information may be information indicating whether or not the UE_A 10 requests establishment and/or use of the second-type PDU session.

And/or, the 6th identification information may be information for requesting the network to transmit the 31st identification information and/or the 32nd identification information (described later) in the tracking area update procedure. Furthermore, the 6th identification information may be information for requesting the network to transmit 34th identification information or 35th identification information in the tracking area update procedure.

Note that the 6th identification information and the 2nd identification information may be a single piece of identification information including significance of each of the pieces of identification information. Therefore, in a case that the present embodiment has description that the 6th identification information and the 2nd identification information are transmitted or included in a control message, the two pieces of identification information may be transmitted or included in the control message as a single piece of identification information including significance of both the two pieces of identification information.

7th identification information in the present embodiment is request information of the UE_A 10 indicating a request for establishment and/or use of the third-type PDU session. The 7th identification information may be information indicating whether or not the UE_A 10 requests establishment and/or use of the third-type PDU session.

And/or, the 7th identification information may be information for requesting the network to transmit the 31st identification information and/or the 32nd identification information (described later) in the tracking area update procedure. Furthermore, the 7th identification information may be information for requesting the network to transmit 36th identification information in the tracking area update procedure.

Note that the 7th identification information and the 3rd identification information may be a single piece of identification information including significance of each of the pieces of identification information. Therefore, in a case that the present embodiment has description that the 7th identification information and the 3rd identification information are transmitted or included in a control message, the two pieces of identification information may be transmitted or included in the control message as a single piece of identification information including significance of both the two pieces of identification information.

11th identification information in the present embodiment is capability information of the network indicating support of the first-type PDU session. The 11th identification information may be information indicating whether or not the network supports the first-type PDU session. Note that the UE_A 10 may recognize that establishment and/or use of the first-type PDU session has been accepted or allowed, based on reception of the 11th identification information.

12th identification information in the present embodiment is capability information of the network indicating support of the second-type PDU session. The 12th identification information may be information indicating whether or not the network supports the second-type PDU session. Note that the UE_A 10 may recognize that establishment and/or use of the second-type PDU session has been accepted or allowed, based on reception of the 12th identification information.

13th identification information in the present embodiment is capability information of the network indicating support of the third-type PDU session. The 13th identification information may be information indicating whether or not the network supports the third-type PDU session. Note that the UE_A 10 may recognize that establishment and/or use of the third-type PDU session has been accepted or allowed, based on reception of the 13th identification information.

14th identification information in the present embodiment is information indicating a type of the PDU session of which establishment and/or use has been accepted and/or allowed by the network. The 14th identification information may be information indicating that the network has accepted and/or allowed establishment and/or use of a PDU session of a type requested by the UE_A 10. Furthermore, the 14th identification information may be information indicating that the network has accepted and/or allowed a request of the UE_A 10. Note that the 14th identification information may include one or more pieces of identification information out of 15th identification information to 17th identification information, or may be configured as an independent piece of identification information similarly to the 15th identification information to the 17th identification information.

And/or, the 14th identification information may be information indicating that the 31st identification information and/or the 32nd identification information (described later) is to be transmitted by the network in the tracking area update procedure. Furthermore, the 14th identification information may be information indicating that any piece of identification information out of the 33rd identification information to the 36th identification information that corresponds to a type of a PDU session indicated by the 14th identification information is to be transmitted by the network in the tracking area update procedure.

Furthermore, the 14th identification information, and the capability information indicating support of establishment and/or use of a PDU session of a type indicated by the 14th identification information may be a single piece of identification information. In other words, the 14th identification information together with any one piece of identification information out of the 11th identification information to the 13th identification information may be a single piece of identification information including significance of each of the pieces of identification information. Therefore, in a case that the present embodiment has description that the 14th identification information indicates a type of the first-type PDU session and that the 14th identification information and the 11th identification information are transmitted or included in a control message, the 14th identification information and the 11th identification information may be transmitted or included in the control message as a single piece of identification information including significance of both the two pieces of identification information.

In a case that the present embodiment has a description where the 14th identification information indicates a type of the second-type PDU session and that the 14th identification information and the 12th identification information are transmitted or included in a control message, the 14th identification information and the 12th identification information may be transmitted or included in the control message as a single piece of identification information including significance of both the two pieces of identification information.

In a case that the present embodiment has description where the 14th identification information indicates a type of the third-type PDU session and that the 14th identification information and the 13th identification information are transmitted or included in a control message, the 14th identification information and the 13th identification information may be transmitted or included in the control message as a single piece of identification information including significance of both the two pieces of identification information.

15th identification information in the present embodiment is information indicating that the network has accepted and/or allowed a request for establishment and/or use of the first-type PDU session. The 15th identification information may be information indicating whether or not the network accepts or allows establishment and/or use of the first-type PDU session.

And/or, the 15th identification information may be information indicating that the 31st identification information and/or the 32nd identification information (described later) is to be transmitted by the network in the tracking area update procedure. Furthermore, the 15th identification information may be information indicating that the 33rd identification information is to be transmitted by the network in the tracking area update procedure.

Note that the 15th identification information and the 11th identification information may be a single piece of identification information including significance of each of the pieces of identification information. Therefore, in a case that the present embodiment has a description where the 15th identification information and the 11th identification information are transmitted or included in a control message, the two pieces of identification information may be transmitted or included in the control message as a single piece of identification information including significance of both the two pieces of identification information.

16th identification information in the present embodiment is information indicating that the network has accepted and/or allowed a request for establishment and/or use of the second-type PDU session. The 16th identification information may be information indicating whether or not the network accepts or allows establishment and/or use of the second-type PDU session.

And/or, the 16th identification information may be information indicating that the 31st identification information and/or the 32nd identification information (described later) is to be transmitted by the network in the tracking area update procedure. Furthermore, the 16th identification information may be information indicating that the 34th identification information or the 35th identification information is to be transmitted by the network in the tracking area update procedure.

Note that the 16th identification information and the 12th identification information may be a single piece of identification information including significance of each of the pieces of identification information. Therefore, in a case that the present embodiment has description that the 16th identification information and the 12th identification information are transmitted or included in a control message, the two pieces of identification information may be transmitted or included in the control message as a single piece of identification information including significance of both the two pieces of identification information.

17th identification information in the present embodiment is information indicating that the network has accepted and/or allowed a request for establishment and/or use of the third-type PDU session. The 17th identification information may be information indicating whether or not the network accepts or allows establishment and/or use of the third-type PDU session.

And/or, the 17th identification information may be information indicating that the 31st identification information and/or the 32nd identification information (described later) is to be transmitted by the network in the tracking area update procedure. Furthermore, the 17th identification information may be information indicating that the 36th identification information is to be transmitted by the network in the tracking area update procedure.

Note that the 17th identification information and the 13th identification information may be a single piece of identification information including significance of each of the pieces of identification information. Therefore, in a case that the present embodiment has description that the 17th identification information and the 13th identification information are transmitted or included in a control message, the two pieces of identification information may be transmitted or included in the control message as a single piece of identification information including significance of both the two pieces of identification information.

18th identification information in the present embodiment is cause information indicating that a request of the UE_A 10 has been rejected. The 18th identification information may be information indicating that a request of the UE_A 10 is not accepted, or may be cause information indicating that a request of the UE_A 10 is not allowed, in a TA to which the UE_A 10 currently belongs. Note that the request of the UE_A 10 may be a request for establishment and/or use of the first-type PDU session, establishment and/or use of the second-type PDU session, or establishment and/or use of the third-type PDU session.

Furthermore, the 18th identification information may be information indicating processing that the UE_A 10 is to perform after receiving a reject message. For example, the 18th identification information may indicate that, in a different TA, the same procedure is to be performed again by using the same identification information. The 18th identification information may indicate that, in the same TA, the same procedure is to be performed again by using different identification information, or a different procedure is to be performed by using different identification information. Note that the procedure herein may be an attach procedure, a PDU session establishment procedure, a tracking area update procedure, a PDU session release procedure, or a detach procedure.

Furthermore, the 18th identification information may be information indicating a type of a PDU session of which establishment and/or use has been rejected by the network.

21st identification information in the present embodiment is information of identification information of a TA in which the UE_A 10 is last registered. The 21st identification information may be information indicating a TA to which the UE_A 10 was last connected. Furthermore, the 21st identification information may be information indicating that a TA to which the UE_A 10 is currently connected and a TA to which the UE_A 10 was previously connected are the same, or information indicating that these TAs are different.

22nd identification information in the present embodiment is information indicating a state of an established PDU session. Note that the state of a PDU session may be information indicating whether or not the PDU session is activated, or information indicating whether or not the PDU session is suspended. Furthermore, the 22nd identification information may be associated with information for identifying a PDU session, or with information for identifying an EPS bearer.

31st identification information in the present embodiment is information indicating a TA list assigned to the UE_A 10 by the network. The 31st identification information may include a TA in which the UE_A 10 is registered, or may include a TA to which the UE_A 10 is currently connected. The 31st identification information may be associated with the 33rd identification information to the 36th identification information.

Furthermore, the 31st identification information may be an information group indicating an area in which the UE_A 10 can move without releasing and/or suspending and/or resuming a PDU session established by the UE_A 10. In other words, in a case that the UE_A 10 enters a TA other than an area indicated by the 31st identification information, the UE_A 10 may release, suspend, or resume the established PDU session.

32nd identification information in the present embodiment is information indicating a value of the first timer determined by the network. The 32nd identification information may be information indicating that the first timer is to be started after the present tracking area update, or information indicating that the first timer is to be run based on suspension of an established PDU session. Note that the value of the first timer may be a value indicating a period of time from when the first timer starts to when the first timer expires.

33rd identification information in the present embodiment is information indicating a PDU session and/or an EPS bearer to be released, immediately before, in the middle of, or immediately after the present tracking area update procedure. The 33rd identification information may be information indicating a PDU session and/or an EPS bearer to be released, based on entry of the UE_A 10 into a TA other than a TA indicated by the 31st identification information. In other words, the 33rd identification information may be information indicating a PDU session and/or an EPS bearer to be released, based on mobility of the UE_A 10 across TAs. Note that the 33rd identification information may include information indicating one or multiple PDU sessions and/or EPS bearers.

Note that the information indicating a PDU session and/or an EPS bearer to be released may be information indicating a DN associated with a PDU session and/or an EPS bearer to be released, or information indicating a type of a network slice associated with a PDU session and/or an EPS bearer to be released. Note that the information indicating a DN may be a Data Network Name (DNN), and the information indicating a type of a network slice may be a network slice type.

In other words, the 33rd identification information may be information indicating a DN associated with a PDU session to be released, or information indicating a type of a slice associated with a PDU session to be released, in a TA destination that the UE_A 10 has entered. In other words, the 33rd identification information may be information indicating a specific DN, or information indicating that a PDU session and/or an EPS bearer associated with a specific DN is to be released. Furthermore, the 33rd identification information may be information indicating a specific type of a slice, or information indicating that a PDU session and/or an EPS bearer associated with a specific type of a slice is to be released.

Note that in a case that each apparatus receives the 33rd identification information, each apparatus may release a PDU session and/or an EPS bearer associated with a DN indicated by the 33rd identification information, or may release a PDU session and/or an EPS bearer associated with a slice type indicated by the 33rd identification information.

34th identification information in the present embodiment is information indicating a PDU session and/or an EPS bearer to be suspended, immediately before, in the middle of, or immediately after the present tracking area update procedure. The 34th identification information may be information indicating a PDU session and/or an EPS bearer to be suspended, based on entry of the UE_A 10 into a TA other than a TA indicated by the 31st identification information. In other words, the 34th identification information may be information indicating a PDU session and/or an EPS bearer to be suspended, based on mobility of the UE_A 10 across TAs. Note that the 34th identification information may include information indicating one or multiple PDU sessions and/or EPS bearers.

Note that the information indicating a PDU session and/or an EPS bearer to be suspended may be information indicating a DN associated with a PDU session and/or an EPS bearer to be suspended, or information indicating a type of a network slice associated with a PDU session and/or an EPS bearer to be suspended. Note that the information indicating a DN may be a DNN, and the information indicating a type of a network slice may be a network slice type.

In other words, the 34th identification information may be information indicating a DN associated with a PDU session to be suspended, or information indicating a type of a slice associated with a PDU session to be suspended, in a TA destination that the UE_A 10 has entered. In other words, the 34th identification information may be information indicating a specific DN, or information indicating that a PDU session and/or an EPS bearer associated with a specific DN is to be suspended. Furthermore, the 34th identification information may be information indicating a specific type of a slice, or information indicating that a PDU session and/or an EPS bearer associated with a specific type of a slice is to be suspended.

Note that in a case that each apparatus receives the 34th identification information, each apparatus may suspend a PDU session and/or an EPS bearer associated with a DN indicated by the 34th identification information, or may suspend a PDU session and/or an EPS bearer associated with a slice type indicated by the 34th identification information.

35th identification information in the present embodiment is information indicating a PDU session and/or an EPS bearer to be resumed, immediately before, in the middle of, or immediately after the present tracking area update procedure. The 35th identification information may be information indicating a PDU session and/or an EPS bearer to be resumed, based on entry of the UE_A 10 into a TA other than a TA indicated by the 31st identification information. In other words, the 35th identification information may be information indicating a PDU session and/or an EPS bearer to be resumed, based on mobility of the UE_A 10 across TAs. Note that the 35th identification information may include information indicating one or multiple PDU sessions and/or EPS bearers.

Note that the information indicating a PDU session and/or an EPS bearer to be resumed may be information indicating a DN associated with a PDU session and/or an EPS bearer to be resumed, or information indicating a type of a network slice associated with a PDU session and/or an EPS bearer to be resumed. Note that the information indicating a DN may be a DNN, and the information indicating a type of a network slice may be a network slice type.

In other words, the 35th identification information may be information indicating a DN associated with a PDU session to be resumed, or information indicating a type of a slice associated with a PDU session to be resumed, in a TA destination that the UE_A 10 has entered. In other words, the 35th identification information may be information indicating a specific DN, or information indicating that a PDU session and/or an EPS bearer associated with a specific DN is to be resumed. Furthermore, the 35th identification information may be information indicating a specific type of a slice, or information indicating that a PDU session and/or an EPS bearer associated with a specific type of a slice is to be resumed.

Note that in a case that each apparatus receives the 35th identification information, each apparatus may resume a PDU session and/or an EPS bearer associated with a DN indicated by the 35th identification information, or may resume a PDU session and/or an EPS bearer associated with a slice type indicated by the 35th identification information.

36th identification information in the present embodiment is information indicating a PDU session and/or an EPS bearer of which session continuity is to be performed, immediately before, in the middle of, or immediately after the present tracking area update procedure. The 36th identification information may be information indicating a PDU session and/or an EPS bearer of which session continuity is to be performed, based on entry of the UE_A 10 into a TA other than a TA indicated by the 31st identification information. In other words, the 36th identification information may be information indicating a PDU session and/or an EPS bearer of which session continuity is to be performed, based on mobility of the UE_A 10 across TAs. Note that the 36th identification information may include information indicating one or multiple PDU sessions and/or EPS bearers.

Note that the information indicating a PDU session and/or an EPS bearer of which session continuity is to be performed may be information indicating a DN associated with a PDU session and/or an EPS bearer of which session continuity is to be performed, or information indicating a type of a network slice associated with a PDU session and/or an EPS bearer of which session continuity is to be performed. Note that the information indicating a DN may be a DNN, and the information indicating a type of a network slice may be a network slice type.

In other words, the 36th identification information may be information indicating a DN associated with a PDU session of which session continuity is to be performed, or information indicating a type of a slice associated with a PDU session of which session continuity is to be performed, in a TA destination that the UE_A 10 has entered. In other words, the 36th identification information may be information indicating a specific DN, or information indicating that session continuity is to be performed on a PDU session and/or an EPS bearer associated with a specific DN. Furthermore, the 36th identification information may be information indicating a specific type of a slice, or information indicating that session continuity is to be performed on a PDU session and/or an EPS bearer associated with the information indicating a specific type of a slice.

Note that in a case that each apparatus receives the 36th identification information, each apparatus may perform session continuity on a PDU session and/or an EPS bearer associated with a DN indicated by the 36th identification information, or may perform session continuity on a PDU session and/or an EPS bearer associated with a slice type indicated by the 36th identification information.

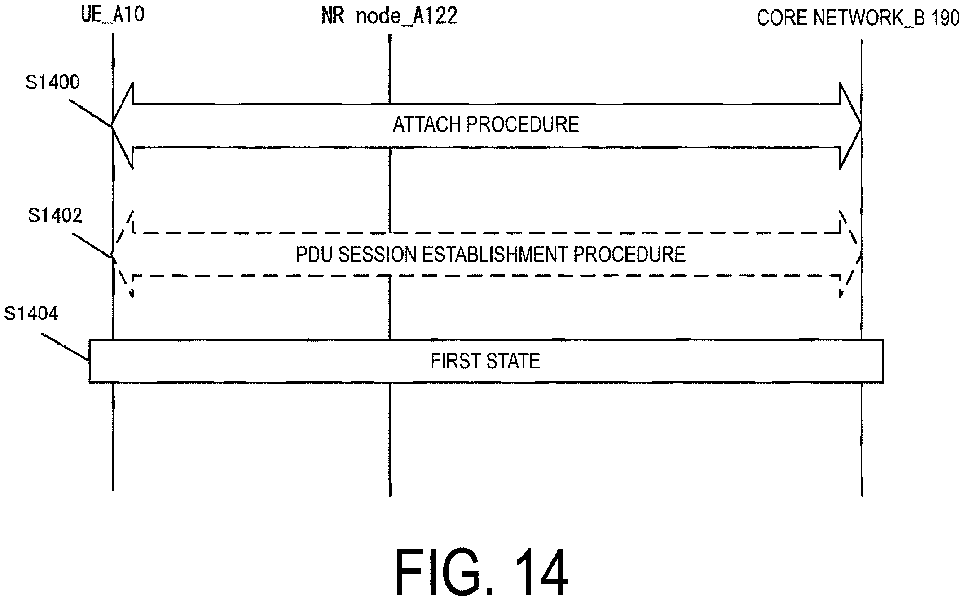

Next, an initial procedure according to the present embodiment will be described with reference to FIG. 14. In the present embodiment, each apparatus performs an initial procedure to transition to the first state, and the UE_A 10 establishes a session via the core network_B 190. The present procedure hereinafter refers to an initial procedure, and each procedure includes an attach procedure and a PDN connectivity procedure. Details of each procedure will be described below.

In the present procedure, first, each apparatus performs an attach procedure (S1400), and the UE_A 10 transitions to a state connected to the network. Next, each apparatus performs a PDU session establishment procedure (S1402), and transitions to the first state (S1404). Note that each apparatus may exchange various pieces of capability information and/or various pieces of request information of each apparatus in the attach procedure and/or the PDU session establishment procedure.

Note that in a case that each apparatus performs exchange of various pieces of information and/or negotiation of various requests in the attach procedure, each apparatus may not perform exchange of various pieces of information and/or negotiation of various requests in the PDU session establishment procedure. On the other hand, in a case that each apparatus does not perform exchange of various pieces of information and/or negotiation of various requests in the attach procedure, each apparatus may perform exchange of various pieces of information and/or negotiation of various requests in the PDU session establishment procedure. Exchange and negotiation are not limited to the cases described above. Even in a case that each apparatus performs exchange of various pieces of information and/or negotiation of various requests in the attach procedure, each apparatus may perform exchange of various pieces of information and/or negotiation of various requests in the PDU session establishment procedure.

For example, the UE_A 10 and the core network_B 190 may perform exchange of one or more pieces of identification information out of the 1st identification information to the 7th identification information and the 21st identification information and/or one or more pieces of identification information out of the 11th identification information to the 17th identification information and the 31st identification information to the 32nd identification information, in the attach procedure and the PDU session establishment procedure. Furthermore, the UE_A 10 and the core network_B 190 may perform the above exchange only in the PDU session establishment procedure without performing the above exchange in the attach procedure, or may perform the above exchange only in the attach procedure without performing the above exchange in the PDU session establishment procedure. The UE_A 10 and the core network_B 190 may exchange, in the PDU session establishment procedure, one or more pieces of identification information that the UE_A 10 and the core network_B 190 do not exchange in the attach procedure, the one or more pieces of identification information being one or more pieces of identification information out of the 1st identification information to the 7th identification information and/or one or more pieces of identification information out of the 11th identification information to the 17th identification information. Note that each apparatus may transmit and/or receive these pieces of identification information in the attach procedure in a case that each apparatus associates these pieces of identification information with the UE_A 10 to manage these pieces of identification information, or may transmit and/or receive these pieces of identification information in the PDU session establishment procedure in a case that each apparatus associates these pieces of identification information with a PDU session and/or an EPS bearer to manage these pieces of identification information.

Each apparatus may perform the PDU session establishment procedure in the attach procedure, or may perform the PDU session establishment procedure after completion of the attach procedure. Note that in a case that the PDU session establishment procedure is performed in the attach procedure, each apparatus may establish a PDU session, based on completion of the attach procedure, or may transition to the first state.

Through the procedures described above, each apparatus completes the present procedure. Note that each apparatus involved in the present procedure may transmit and/or receive each control message described in the present procedure to transmit and/or receive one or more pieces of identification information included in each control message, and may store each transmitted and/or received piece of identification information as a context. Furthermore, each apparatus may transition to the first state, based on completion of the present procedure.

### 1.3.1. Overview of Attach Procedure

First, an overview of an attach procedure will be described. An attach procedure is a procedure initiated by the UE_A 10 to connect to the network (the access network, and/or the core network_B 190, and/or the PDN_A 5). In a state in which the UE_A 10 is not connected to the network, the UE_A 10 can perform the present procedure at any timing such as timing of terminal power activation. In other words, the UE_A 10 may initiate the present procedure at any timing in a case that the UE_A 10 is in a deregistered state (EMM-DEREGISTERED). Each apparatus may transition to a registered state (EMM-REGISTERED), based on completion of the attach procedure.

### 1.3.2. Example of PDU Session Establishment Procedure

Next, an example of a PDU session establishment procedure will be described. The present procedure hereinafter refers to a PDU session establishment procedure. The present procedure is a procedure for each apparatus to establish a PDU session. Note that each apparatus may perform the present procedure in a state after each apparatus completed the attach procedure, or may perform the present procedure in the attach procedure. Each apparatus may initiate the present procedure in a registered state, or may initiate the present procedure at any timing after the attach procedure. Each apparatus may establish a PDU session, based on completion of the PDU session establishment procedure. Furthermore, each apparatus may perform the present procedure multiple times to establish multiple PDU sessions.

### 1.3.2.1. Example of PDU Session Establishment Procedure

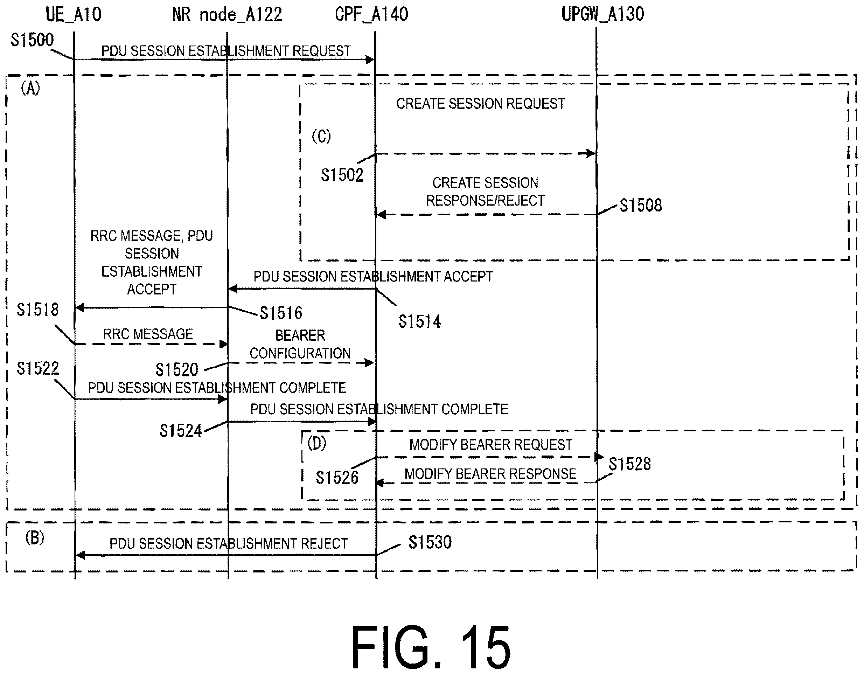

With reference to FIG. 15, an example of a process of performing a PDU session establishment procedure will be described. Each step of the present procedure will be described below. First, the UE_A 10 transmits a PDU Session Establishment Request message to the CPF_A 140 via the NR node_A 122 (S1500), and initiates a PDU session establishment procedure. Note that in a case that a PDU session is a PDN connection, the PDU session establishment request message may be a PDN connectivity request message. Furthermore, the PDU session establishment request message may be a Non-Access-Stratum (NAS) message. The PDU session establishment request message is not limited to the PDU session establishment request message described above, and may be a message for requesting an establishment of a PDU session.

Specifically, the UE_A 10 transmits a Radio Resource Control (RRC) message including a PDU session establishment request message to the NRnode_A 122. The NR node_A 122, which has received the RRC message including the PDU session establishment request message, selects the CPF_A 140 as an NF or a common CP function of a routing destination of the PDU session establishment request message, and transmits a PDU session establishment request message to the CPF_A 140. Here, the NR node_A 122 may select an NF or a common CP function of a routing destination, based on information included in the RRC message.

Here, the UE_A 10 may include at least one or more pieces of identification information out of the 1st identification information to the 7th identification information in the PDU session establishment request message and/or in the RRC message including the PDU session establishment request message, or may include these pieces of identification information in the PDU session establishment request message and/or in the RRC message including the PDU session establishment request message to indicate a request of the UE_A 10.

Furthermore, the UE_A 10 may transmit the 1st identification information to the 7th identification information to indicate a type of a PDU session of which establishment is requested and/or supported by the UE_A 10. More specifically, the UE_A 10 may transmit the 1st identification information, and/or the 5th identification information, and/or the 4th identification information indicating the first-type PDU session to indicate that the UE_A 10 requests establishment of the first-type PDU session, and/or that the UE_A 10 supports establishment of the first-type PDU session.

Furthermore, the UE_A 10 may transmit the 2nd identification information, and/or the 6th identification information, and/or the 4th identification information indicating the second-type PDU session to indicate that the UE_A 10 requests establishment of the second-type PDU session, and/or that the UE_A 10 supports establishment of the second-type PDU session.

Furthermore, the UE_A 10 may transmit the 3rd identification information, and/or the 7th identification information, and/or the 4th identification information indicating the third-type PDU session to indicate that the UE_A 10 requests establishment of the third-type PDU session, and/or that the UE_A 10 supports establishment of the third-type PDU session.

Note that the UE_A 10 may determine which piece of identification information out of the 1st identification information to the 7th identification information is to be included in the PDU session establishment request message, based on capability information of the UE_A 10, and/or a policy such as a UE policy, and/or preference of the UE_A 10. Note that determination performed by the UE_A 10 as to which piece of identification information is to be included in the PDU session establishment request message is not limited to the determination described above.

The CPF_A 140 receives the PDU session establishment request message, and performs first condition determination. The first condition determination is intended to determine whether or not the CPF_A 140 accepts a request of the UE_A 10. In the first condition determination, the CPF_A 140 determines whether the first condition is true or false. The CPF_A 140 initiates the procedure of (A) in the present procedure in a case that the first condition is true, and initiates the procedure of (B) in the present procedure in a case that the first condition is false. Note that steps in a case that the first condition is false will be described later.

Steps in a case that the first condition is true, i.e., each step of the procedure of (A) in the present procedure, will be described below. The CPF_A 140 performs the procedure of (C) in the present procedure, and initiates the procedure of (A) in the present procedure. Furthermore, each step of the procedure of (C) in the present procedure will be described. First, the CPF_A 140 selects an NSI and/or an UPGW_A 130 to which the CPF_A 140 is to be connected, transmits a create session request message to the selected UPGW_A 130 or to an UPGW_A 130 associated with the selected NSI, to initiate the procedure of (C) in the present procedure (S1502).

Here, the CPF_A 140 may include at least one or more pieces of identification information out of the 1st identification information to the 7th identification information in the create session request message, may include information indicating whether or not it is an initial request in the create session request message, or may include these pieces of identification information in the create session request message to convey a request of the UE_A 10.

Furthermore, the UPGW_A 130 receives the create session request message, and performs third condition determination. Note that the third condition determination is intended to determine whether or not the UPGW_A 130 accepts a request of the UE_A 10. A case that the third condition is true may be equivalent to a case that a request of the UE_A 10 is accepted, and may be equivalent to a case that a request of the UE_A 10 is allowed. A case that the third condition is false may be equivalent to a case that a request of the UE_A 10 is rejected, and may be equivalent to a case that the third condition is not determined as true.

The third condition determination may not be performed by the UPGW_A 130, but may be performed by another apparatus (e.g., the PCRF_A 60). In that case, the UPGW_A 130 performs an IP-CAN session establishment procedure with the PCRF_A 60. More specifically, the UPGW_A 130 transmits a request message to the PCRF_A 60 in an IP-CAN session establishment procedure. Furthermore, the PCRF_A 60 receives the request message in the IP-CAN session establishment procedure, determines third condition, and transmits a response message in the IP-CAN session establishment procedure to the UPGW_A 130. Furthermore, the UPGW_A 130 receives the response message in the IP-CAN session establishment procedure, and recognizes a result of the third condition determination.

Here, the UPGW_A 130 may include at least one or more pieces of identification information out of the 1st identification information to the 7th identification information in the request message in the IP-CAN session establishment procedure, or may include these pieces of identification information in the request message in the IP-CAN session establishment procedure to convey a request of the UE_A 10.

The PCRF_A 60 may include at least a result of the third condition determination in the response message in the IP-CAN session establishment procedure, or may include this result in the response message in the IP-CAN session establishment procedure to notify the UPGW_A 130 of a result of the third condition determination.

Furthermore, the PCRF_A 60 may include one or more pieces of identification information out of the 11th identification information to the 17th identification information in the response message in the IP-CAN session establishment procedure, or may include these pieces of identification information in the response message in the IP-CAN session establishment procedure to indicate that a request of the UE_A 10 has been accepted and/or allowed.

The PCRF_A 60 may include one or more pieces of identification information out of the 18th identification information in the response message in the IP-CAN session establishment procedure, or may include these pieces of identification information in the response message in the IP-CAN session establishment procedure to indicate that a request of the UE_A 10 has been rejected.

Note that in a case that the PCRF_A 60 performs the third condition determination, the UPGW_A 130 may perform the third condition determination, based on a result of the third condition determination received from the PCRF_A 60. For example, in a case that the PCRF_A 60 accepts a request of the UE_A 10, the PCRF_A 60 and the UPGW_A 130 may regard the third condition as true, and in a case that the PCRF_A 60 rejects a request of the UE_A 10, the PCRF_A 60 and the UPGW A 130 may regard the third condition as false.

In the third condition determination, the UPGW_A 130 determines whether the third condition is true or false. In a case that the third condition is true, the UPGW_A 130 transmits a create session response message to the CPF_A 140 (S1506). Furthermore, the CPF_A 140 receives the create session response message.

The UPGW_A 130 may include one or more pieces of identification information out of the 11th identification information to the 17th identification information in the create session response message, may include an IP address in the create session response message, or may include these pieces of identification information in the create session response message to indicate that a request of the UE_A 10 has been allowed.

In a case that the third condition is false, the UPGW_A 130 transmits a create session reject message to the CPF_A 140 (S1508). Note that the create session reject message may be a create session response message including a Reject cause.

The UPGW_A 130 may include one or more pieces of identification information out of the 18th identification information in the create session reject message, or may include these pieces of identification information in the create session reject message to indicate that a request of the UE_A 10 has been rejected.

Each apparatus completes the procedure of (C) in the present procedure, based on transmission and/or reception of the create session response message and/or the create session reject message.

The CPF_A 140 transmits a PDU session establishment accept message to the NR node_A 122, based on reception of the create session response message (S1514). Note that in a case that the CPF_A 140 receives a create session reject message, the CPF_A 140 may not continue the procedure of (A) in the present procedure, and may initiate the procedure of (B) in the present procedure. In a case that a PDU session is PDN connection, the PDU session establishment accept message may be a PDN Connectivity Accept message, or an Activate default EPSbearer context request message. Furthermore, the PDU session establishment accept message may be a NAS message. The PDU session establishment accept message may be a response message in response to the PDU session establishment request message. However, the PDU session establishment accept message is not limited to this, and may be a message for accepting a request of a PDU session establishment.

The NR node_A 122 receives the PDU session establishment accept message, and transmits an RRC message (e.g., which may be an RRC message such as an RRC Connection Reconfiguration message and an RRCConnection Setup message or an RRC Direct Transfer message) and/or a PDU session establishment accept message to the UE_A 10 (S1516). Note that the PDU session establishment accept message may be included in the RRC message to be transmitted and/or received.

Here, the CPF_A 140 may include at least one or more pieces of identification information out of the 11th identification information to the 17th identification information in the PDU session establishment accept message, may include an IP address in the PDU session establishment accept message, or may include these pieces of identification information in the PDU session establishment accept message to indicate that a request of the UE_A 10 has been accepted.

Furthermore, the CPF_A 140 may transmit the 11th identification information to the 17th identification information to indicate a type of a PDU session of which establishment is allowed and/or supported by the network. More particularly, the CPF_A 140 may transmit the 11th identification information and/or the 15th identification information and/or the 14th identification information indicating the first-type PDU session to indicate that establishment of the first-type PDU session has been accepted and/or supported by the network.

Furthermore, the CPF_A 140 may transmit the 12th identification information and/or the 16th identification information and/or the 14th identification information indicating the second-type PDU session to indicate that establishment of the second-type PDU session has been accepted and/or supported by the network.

Furthermore, the CPF_A 140 may transmit the 3rd identification information and/or the 7th identification information and/or the 4th identification information indicating the third-type PDU session to indicate that establishment of the third-type PDU session has been accepted and/or supported by the network.

In a case that the UE_A 10 receives an RRC message, the UE_A 10 transmits an RRC message (e.g., which may be an RRC message such as an RRC Connection Reconfiguration Complete message, an RRC Connection Setup Complete message, and an RRCDirect Transfer message) to the NR node_A 122 (S1518). The NRnode_A 122 receives the RRC message, and transmits a bearer setup message to the CPF_A 140 (S1520). Furthermore, the CPF_A 140 receives the bearer setup message.

Note that the CPF_A 140 may determine which piece of identification information out of the 11th identification information to the 17th identification information is to be included in the PDU session establishment accept message, based on a received piece of identification information, and/or capability information of the network, and/or a policy such as an operator policy, and/or a state of the network. Note that determination performed by the CPF_A 140 as to which piece of identification information is to be included in the PDU session establishment accept message is not limited to the determination described above.

In a case that the UE_A 10 receives a PDU session establishment accept message, the UE_A 10 transmits a PDU session establishment complete message to the CPF_A 140 via the NR node_A 122 (S1522) (S1524). Furthermore, the CPF_A 140 receives the PDU session establishment complete message, and performs second condition determination. Note that in a case that a PDU session is PDN connection, the PDU session establishment complete message may be a PDN Connectivity complete message, or an Activate default EPSbearer context accept message. Furthermore, the PDU session establishment complete message may be a NAS message. The PDU session establishment complete message may be a response message in response to the PDU session establishment accept message. However, the PDU session establishment complete message is not limited to this, and may be a message for indicating that a PDU session establishment procedure is to complete.

The second condition determination is intended to determine whether or not the CPF_A 140 needs to request a modification of a bearer from the UPGW_A 130. In a case that the second condition is true, the CPF_A 140 initiates the procedure of (D) in the present procedure. In a case that the second condition determination is false, the CPF_A 140 does not perform the procedure of (D) in the present procedure. Each step of the procedure of (D) in the present procedure will be described below. In a case that the second condition is true, the CPF_A 140 transmits a modify bearer request message to the SGW_A 35 (S1526), and initiates the procedure of (D) in the present procedure. Furthermore, the SGW_A 35 receives the modify bearer request message, and transmits a modify bearer response message to the CPF_A 140 (S1528). Furthermore, the CPF_A 140 receives the modify bearer response message, and completes the procedure of (D) in the present procedure. Furthermore, each apparatus completes the procedure of (A) in the present procedure, based on transmission and/or reception of the PDU session establishment complete message in a case that the second condition determination is false, and/or based on completion of the procedure of (D) in the present procedure in a case that the second condition determination is true.

Next, each step of the procedure of (B) in the present procedure will be described. The CPF_A 140 transmits a PDU session establishment reject message to the UE_A 10 via the NR node_A 122 (S1530), and initiates the procedure of (B) in the present procedure. Furthermore, the UE_A 10 receives the PDU session establishment reject message, and recognizes that a request of the UE_A 10 has been rejected. Each apparatus completes the procedure of (B) in the present procedure, based on transmission and/or reception of the PDU session establishment reject message. The PDU session establishment reject message may include an appropriate reject cause. Note that in a case that a PDU session is PDN connection, the PDU session establishment reject message may be a PDN Connectivity reject message. Furthermore, the PDU session establishment reject message may be a NAS message. The PDU session establishment reject message may be a response message in response to the PDU session establishment request message. However, the PDU session establishment reject message is not limited to this, and may be a message for rejecting a request of a PDU session establishment.

The CPF_A 140 may include the 18th identification information in the PDU session establishment reject message, or may include these pieces of identification information in the PDU session establishment reject message to indicate that a request of the UE_A 10 has been rejected.

Furthermore, the CPF_A 140 may transmit and/or receive the 18th identification information to indicate the reason why the PDU session establishment procedure has been rejected, or to indicate processing that each apparatus is to perform after the PDU session establishment procedure.

Each apparatus completes the present procedure, based on completion of the procedure of (A) or (B) in the present procedure. Note that each apparatus may transition to a state in which a PDU session is established, based on completion of the procedure of (A) in the present procedure. Each apparatus may recognize that the present procedure has been rejected, or may transition to a state in which a PDU session is not established, based on completion of the procedure of (B) in the present procedure.

Furthermore, each apparatus may perform processing based on identification information transmitted and/or received in the present procedure, based on completion of the present procedure. For example, in a case that the UE_A 10 receives one or more pieces of identification information out of the 11th identification information to the 17th identification information, the UE_A 10 may establish a PDU session of a type indicated by each piece of identification information, or may recognize that a type of an established PDU session is a type indicated by the identification information. Note that the UE_A 10 may establish a default-type PDU session, irrespective of a received piece of identification information.

In a case that the UE_A 10 receives the 18th identification information, the UE_A 10 may recognize the reason why a request of the UE_A 10 has been rejected. Furthermore, the UE_A 10 may perform the present procedure again with another condition, or perform another procedure other than the tracking area update procedure or the like, based on the reason why a request of the UE_A 10 has been rejected.

The previously described first condition determination to third condition determination may be performed based on identification information, and/or subscriber information, and/or an operator policy included in the PDU session establishment request message. Conditions with which true or false of the first condition to the third condition is determined may not be limited to the previously described conditions.

For example, the first condition and/or the third condition may be true in a case that the UE_A 10 requests an establishment of a PDU session and the network allows the request. The first condition and/or the third condition may be false in a case that the UE_A 10 requests an establishment of a PDU session and the network does not allow the request. Furthermore, the first condition and/or the third condition may be true in a case that the network of a connection destination of the UE_A 10 and/or an apparatus in the network supports an establishment of a PDU session that the UE_A 10 requests, and may be false in a case that such network and/or apparatus does not support an establishment of a PDU session that the UE_A 10 requests.

### 1.3.3. Example of Attach Procedure

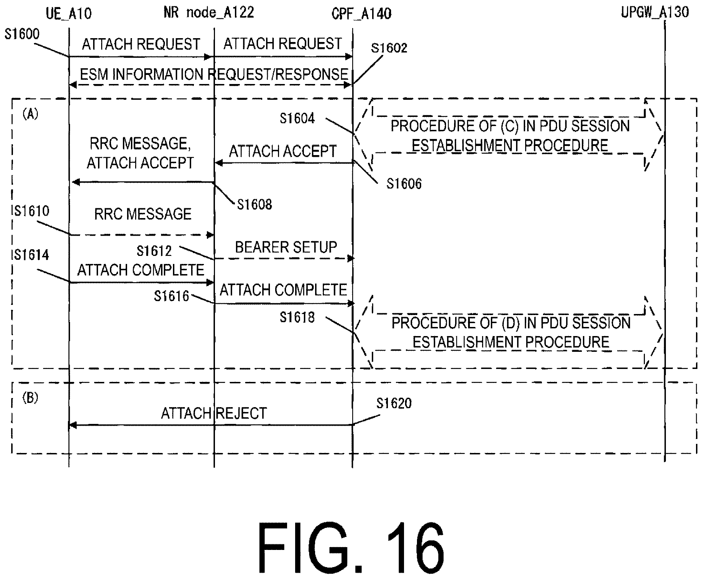

With reference to FIG. 16, an example of a process of performing an attach procedure will be described. The present procedure hereinafter refers to an attach procedure. The present procedure is a procedure for the UE_A 10 to be registered in the network. Each step of the present procedure will be described below. First, the UE_A 10 transmits an Attach request message to the CPF_A 140 via the NR node A 122 (S1600), to initiate an attach procedure. The UE_A 10 may include the PDU session establishment request message described above in the attach request message to transmit the attach request message, or may include the PDU session establishment request message in the attach request message to request performance of a PDU session establishment procedure in an attach procedure.

Specifically, the UE_A 10 transmits an RRC message including an attach request message to the NR node_A 122. The NR node_A 122, which has received the RRC message including the attach request message, selects a CPF_A 140 as an NF or a common CP function of a routing destination of the attach request message, and transmits an attach request message to the CPF_A 140. Here, the NR node_A 122 may select an NF or a common CP function of a routing destination, based on information included in the RRC message. The attach request message may be a NAS message.

Note that the UEA 10 may include, in one RRC message, one or more attach request messages present for respective NSIs of which connection is requested by the UE_A 10 to transmit the one or more attach request messages, or multiple attach request messages may be collectively referred to as an attach request message. Alternatively, the UE_A 10 may include an attach request message in an RRC message to transmit the attach request message, for each NSI of which connection is requested by the UE_A 10.

Here, the UE_A 10 may include at least one or more pieces of identification information out of the 1st identification information to the 7th identification information and the 21st identification information in the attach request message and/or in the RRC message, or may include these pieces of identification information in the attach request message and/or in the RRC message to indicate a request of the UE_A 10.

Furthermore, the UE_A 10 may transmit the 1st identification information to the 7th identification information to indicate a type of a PDU session of which establishment is requested and/or supported by the UE_A 10. More specifically, the UE_A 10 may transmit the 1st identification information, and/or the 5th identification information, and/or the 4th identification information indicating the first-type PDU session to indicate that the UE_A 10 requests establishment of the first-type PDU session, and/or that the UE_A 10 supports establishment of the first-type PDU session.

Furthermore, the UE_A 10 may transmit the 2nd identification information, and/or the 6th identification information, and/or the 4th identification information indicating the second-type PDU session to indicate that the UE_A 10 requests establishment of the second-type PDU session, and/or that the UE_A 10 supports establishment of the second-type PDU session.

Furthermore, the UE_A 10 may transmit the 3rd identification information, and/or the 7th identification information, and/or the 4th identification information indicating the third-type PDU session to indicate that the UE_A 10 requests establishment of the third-type PDU session, and/or that the UE_A 10 supports establishment of the third-type PDU session.

Furthermore, the UE_A 10 may transmit the 21st identification information to indicate that the current TA is the same as a TA to which the UE_A 10 was previously connected, or may indicate that the current TA is different from a TA to which the UE_A 10 was previously connected. Note that the UE_A 10 may associate the 1st identification information to the 7th identification information with the 21st identification information to transmit associated pieces of identification information.

Note that the UE_A 10 may determine which piece of identification information out of the 1st identification information to the 7th identification information and the 21st identification information is to be included in the attach request message, based on capability information of the UE_A 10, and/or a policy such as a UE policy, and/or preference of the UE_A 10. Note that determination performed by the UE_A 10 as to which piece of identification information is to be included in the attach request message is not limited to the determination described above.

The UE_A 10 may include these pieces of identification information in a control message different from an attach request message to transmit these pieces of identification information. For example, the UE_A 10 may include these pieces of identification information in an ESM information response message (S1602), which is a response message in response to an EPS Session Management (ESM) information request message, to transmit these pieces of identification information.

The CPF_A 140 receives the attach request message and/or the control message different from an attach request message, and performs first condition determination. The CPF_A 140 initiates the procedure of (A) in the present procedure in a case that the first condition is true, and initiates the procedure of (B) in the present procedure in a case that the first condition is false.

Each step of the procedure of (A) in the present procedure will be described below. The CPF_A 140 performs fourth condition determination, and initiates the procedure of (A) in the present procedure. In the fourth condition determination, the CPF_A 140 determines whether the fourth condition is true or false. The CPF_A 140 performs the procedure of (C) in the UE-initiated PDU session establishment procedure in a case that the fourth condition is true, and omits the procedure of (C) in the PDU session establishment procedure in a case that the fourth condition is false (S1604). Furthermore, the CPF_A 140 transmits an Attach accept message to the NR node_A 122, based on reception of an attach request message and/or a create session response message, and/or completion of the procedure of (C) in a PDN connectivity procedure (S1606). Note that in a case that the CPF_A 140 receives a create session reject message, the CPF_A 140 may not continue the procedure of (A) in the present procedure, and may initiate the procedure of (B) in the present procedure. Here, the CPF_A 140 may include an attach accept message in an S1AP message (e.g., Initial context setup request and Downlink NAS Transport), and may transmit the attach accept message to the NR node_A 122. Furthermore, the attach accept message may be a NAS message. The attach accept message may be a response message in response to the attach request message.

The NR node_A 122 receives the attach accept message, and transmits an RRC message (e.g., which may be an RRC message such as an RRCConnection Reconfiguration message, an RRC Connection Setup message, and an RRC Direct Transfer message) and/or an attach accept message to the UE_A 10 (S1608). Note that the attach accept message may be included in the RRC message to be transmitted and/or received. Furthermore, in a case that the fourth condition is true, the CPF_A 140 may include the PDU session establishment accept message described above in the attach accept message and may transmit the PDU session establishment accept message, or may indicate that the PDU session establishment procedure has been accepted by including the PDU session establishment accept message in the attach accept message.

Here, the CPF_A 140 may include at least one or more pieces of identification information out of the 11th identification information to the 17th identification information and the 31st identification information to the 32nd identification information in the attach accept message, may include an IP address in the attach accept message, or may indicate that a request of the UE_A 10 has been accepted by including these pieces of identification information in the attach accept message.

Furthermore, the CPF_A 140 may transmit the 11th identification information to the 17th identification information to indicate a type of a PDU session of which establishment is allowed and/or supported by the network. More specifically, the CPF_A 140 may transmit the 11th identification information, and/or the 15th identification information, and/or the 14th identification information indicating the first-type PDU session to indicate that a type of a PDU session allowed and/or supported by the network is the first-type PDU session.

Furthermore, the CPF_A 140 may transmit the 12th identification information, and/or the 16th identification information, and/or the 14th identification information indicating the second-type PDU session to indicate that a type of a PDU session allowed and/or supported by the network is the second-type PDU session.

Furthermore, the CPF_A 140 may transmit the 13th identification information, and/or the 17th identification information, and/or the 14th identification information indicating the third-type PDU session to indicate that a type of a PDU session allowed and/or supported by the network is the third-type PDU session.

Furthermore, the CPF_A 140 may transmit the 31st identification information to indicate one or multiple TAs that the network allowed the UE_A 10 to be connected to, or indicate an area in which the UE_A 10 can move without performing the tracking area update procedure after completion of the present procedure.

Furthermore, the CPF_A 140 may associate the 11th identification information to the 17th identification information with the 31st identification information to transmit associated pieces of identification information, or may transmit these associated pieces of identification information to indicate that establishment of a PDU session of a type indicated by the 11th identification information to the 17th identification information is allowed and/or supported within a TA indicated by the 31st identification information.

Furthermore, in a case that a PDU session of a type indicated by the 11th identification information to the 17th identification information is the second-type PDU session, the CPF_A 140 may further transmit the 32nd identification information, or may transmit the 32nd identification information to indicate a period of time in which suspension of a PDU session is valid in a case that the PDU session is suspended.

Note that the CPF_A 140 may determine which piece of identification information out of the 11th identification information to the 17th identification information and the 31st identification information to the 32nd identification information is to be included in the attach accept message, based on a received piece of identification information, and/or capability information of the network, and/or a policy such as an operator policy, and/or a state of the network. Note that determination performed by the CPF_A 140 as to which piece of identification information is to be included in the attach accept message is not limited to the determination described above.

Here, the first condition determination may be the same as the first condition determination in the PDU session establishment procedure. The fourth condition determination is intended to determine whether or not the CPF_A 140 performs a PDU session establishment procedure. A case that the fourth condition is true may be equivalent to a case that a PDU session establishment request message is received, and may be equivalent to a case that a PDU session establishment procedure is also to be performed in the present procedure. A case that the fourth condition is false may be equivalent to a case that a PDU session establishment request message is not received, may be equivalent to a case that a PDU session establishment procedure is not to be performed either in the present procedure, and may be equivalent to a case that the fourth condition is not determined as true.

In a case that the UE_A 10 receives an RRC message from the NR node_A 122, the UE_A 10 transmits an RRC connection message (e.g., which may be an RRC message such as an RRC Connection Reconfiguration Complete message, an RRC Connection Setup Complete message, and an RRCDirect Transfer message) to the NR node_A 122 (S1610). The NRnode_A 122 receives the RRC message, and transmits a bearer setup message to the CPF_A 140 (S1612). Furthermore, the CPF_A 140 receives the bearer setup message.

In a case that the UE_A 10 receives an attach accept message from the CPF_A 140 via the NR node_A 122, the UE_A 10 transmits an Attach complete message to the CPF_A 140 via the NR node_A 122 (S1614) (S1616). Furthermore, the CPF_A 140 receives the attach complete message. Furthermore, in a case that the fourth condition is true, the CPF_A 140 performs second condition determination. The second condition determination is intended to determine whether or not the CPF_A 140 needs to request a modification of a bearer from the UPGW_A 130. In a case that the second condition is true, the CPF_A 140 starts and performs the procedure of (D) in a PDU session establishment procedure (S1618). Each apparatus completes the procedure of (A) in the present procedure, based on transmission and/or reception of the attach complete message and/or completion of the procedure of (D) in the PDU session establishment procedure.

Note that in a case that the UE_A 10 receives a PDU session establishment accept message, the UE_A 10 may include the PDU session establishment complete message described above in the attach complete message to transmit the PDU session establishment complete message, or may include the PDU session establishment complete message in the attach complete message to indicate that the PDU session establishment procedure is to complete. Here, the attach complete message may be a NAS message. The attach complete message may be a response message in response to the attach response message.

Next, each step of the procedure of (B) in the present procedure will be described. The CPF_A 140 transmits an Attach reject message to the UE_A 10 via the NR node_A 122 (S1620), to initiate the procedure of (B) in the present procedure. Furthermore, the UE_A 10 receives the attach reject message, and recognizes that a request of the UE_A 10 has been rejected. Each apparatus completes the procedure of (B) in the present procedure, based on transmission and/or reception of the attach reject message. Note that in a case that the fourth condition is true, the CPF_A 140 may include the PDU session establishment reject message described above in the attach reject message to transmit the PDU session establishment reject message, or may include the PDU session establishment reject message in the attach reject message to indicate that the PDU session establishment procedure has been rejected. In that case, the UE_A 10 may further receive a PDU session establishment reject message, or may certify that the PDU session establishment procedure has been rejected. Furthermore, the attach reject message may be a NAS message. The attach reject message may be a response message in response to the attach request message. However, the attach reject message is not limited to this, and may be a message for rejecting registration of the UE_A 10 in the network.

The CPF_A 140 may include the 18th identification information in the attach reject message, or may include these pieces of identification information in the attach reject message to indicate that a request of the UE_A 10 has been rejected.

Furthermore, each apparatus may transmit and/or receive the 18th identification information to recognize the reason why the attach procedure has been rejected, to indicate processing that each apparatus is to perform after the attach procedure, to perform the present procedure again, or to perform the present procedure with another condition.

Each apparatus completes the present procedure, based on completion of the procedure of (A) or (B) in the present procedure. Note that each apparatus may transition to a state in which the UE_A 10 is connected to the network and/or a registered state, based on completion of the procedure of (A) in the present procedure. Each apparatus may recognize that the present procedure has been rejected, or may transition to a state in which each apparatus cannot be connected to the network, based on completion of the procedure of (B) in the present procedure. Transition to each state of each apparatus may be performed based on completion of the present procedure, or may be performed based on an establishment of a PDU session.

Furthermore, each apparatus may perform processing based on identification information transmitted and/or received in the present procedure, based on completion of the present procedure. For example, in a case that the UE_A 10 receives one or more pieces of identification information out of the 11th identification information to the 17th identification information and the 31st identification information to the 32nd identification information, the UE_A 10 may recognize that establishment of a PDU session of a type indicated by each piece of the 11th identification information to the 17th identification information is allowed and/or supported in a TA indicated by the 31st identification information.

In a case that the UE_A 10 receives the 18th identification information, the UE_A 10 may recognize the reason why a request of the UE_A 10 has been rejected. Furthermore, the UE_A 10 may perform the present procedure again, based on the reason why a request of the UE_A 10 has been rejected, or may perform an attach procedure for the core network_A 90 or another cell.

The above-mentioned first condition determination to the fourth condition determination may be performed based on identification information, and/or subscriber information, and/or an operator policy included in the attach request message. Conditions with which true or false of the first condition to the fourth condition is determined may not be limited to the above-mentioned conditions.

For example, the first condition determination and/or the third condition determination may be similar to the example of the above-mentioned PDU session establishment procedure.

### 1.4. Description of Procedure Associated with UE Mobility

Next, description will be given with reference to a procedure associated with UE mobility. In the present embodiment, each apparatus performs a procedure associated with UE mobility to transition to the first state or the second state. The present procedure hereinafter refers to a procedure associated with UE mobility.

Furthermore, the present procedure may include a procedure associated with first UE mobility, and a procedure associated with second UE mobility. The procedure associated with first UE mobility may be a procedure performed while each apparatus is in the first state, whereas the procedure associated with second UE mobility may be a procedure performed while each apparatus is in the second state.

### 1.4.1. Description of Procedure Associated with First UE Mobility

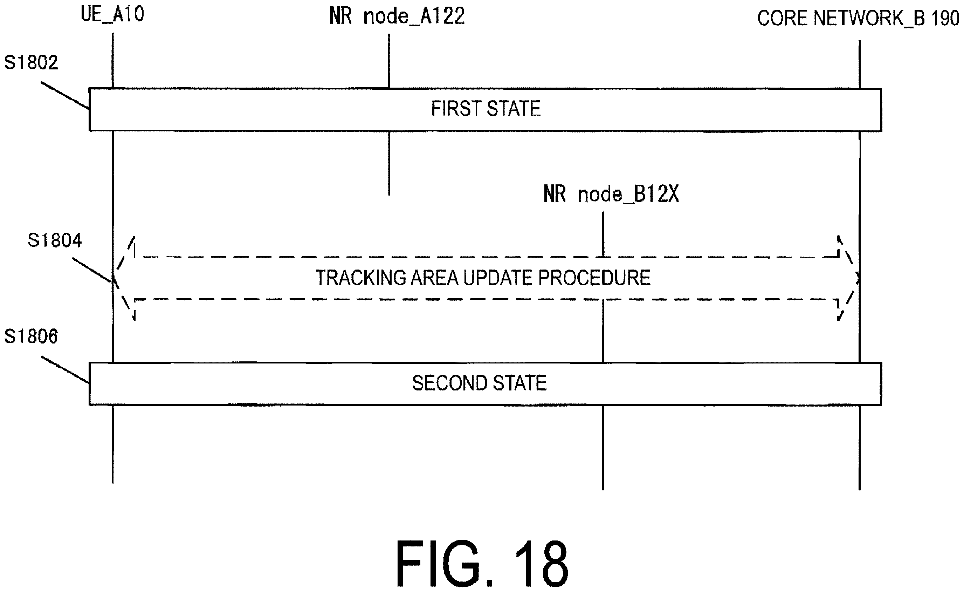

Next, a procedure associated with first UE mobility will be described with reference to FIG. 18. The procedure associated with first UE mobility is a procedure performed in a case that each apparatus is in the first state and that the UE_A 10 performs mobility across TAs. The present procedure hereinafter refers to a procedure associated with first UE mobility, and each procedure includes a tracking area update procedure. Furthermore, the NRnode_B 123 may be located in a TA that the UE_A 10 newly enters. Tracking area update performed in the present procedure may be performed with regard to the NRnode_A 122. In this case, the NR node_B 123 may perform transmission and/or reception and each processing of each message performed by the NR node_A 122 in a tracking area update procedure. Furthermore, in a case that each apparatus is in the first state, the present procedure may be a procedure that can be performed at any timing.

Next, each procedure will be described below. First, in the first state (S1802), each apparatus performs a tracking area update procedure (S1804). Note that the tracking area update procedure may be performed based on mobility of the UE_A 10 across TAs, or may be performed regularly. The procedure is not limited to the procedure described above, and the tracking area update procedure may be performed at any timing on a condition of having transitioned to the first state.

Each apparatus may exchange various pieces of request information in the tracking area update procedure. For example, in the tracking area update procedure, the UE_A 10 and the core network_B 190 may perform exchange of one or more pieces of identification information out of the 1st identification information to the 4th identification information and the 21st identification information, and/or one or more pieces of identification information out of the 11th identification information to the 14th identification information and the 31st identification information to the 36th identification information.

Furthermore, each apparatus may transition to the second state, based on completion of the tracking area update procedure. Note that the state to which each apparatus transitions based on completion of the tracking area update procedure is not limited to the state described above.

Through the procedures described above, each apparatus completes the present procedure. Note that each apparatus involved in the present procedure may transmit and/or receive each control message described in the present procedure to transmit and/or receive one or more pieces of identification information included in each control message, and may store each transmitted and/or received piece of identification information as a context. Furthermore, each apparatus may transition from the first state to the second state (S1806), based on completion of the present procedure.

Here, each apparatus may start running of the first timer, based on transition to the second state. In other words, each apparatus may start running of the first timer, based on suspension of an established PDU session. In other words, each apparatus may start running of the first timer, based on completion of the tracking area update procedure. Furthermore, each apparatus may run the first timer by using a value of the timer transmitted and/or received in the tracking area update procedure as a value of the first timer.

Furthermore, in a case that the UE_A 10 moves again to a tracking area to which the UE_A 10 was previously connected in a state while the first timer is run, the UE_A 10 may initiate a procedure associated with second UE mobility, or each apparatus may resume the suspended PDU session and may further stop running of the first timer. In contrast, in a case that running of the first timer expires, the UE_A 10 may initiate a procedure associated with second UE mobility, or each apparatus may release the suspended PDU session. Note that the tracking area to which the UE_A 10 was previously connected may be a tracking area included in a TA list stored by the UE_A 10 before the UE_A 10 performs the tracking area update procedure.

### 1.4.2. Description of Procedure Associated with Second UE Mobility

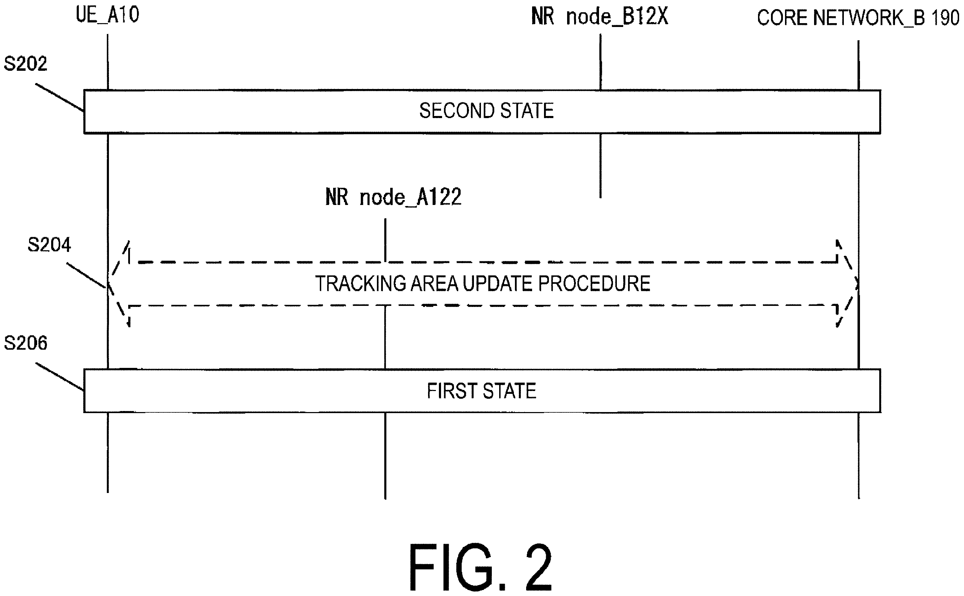

Next, a procedure associated with second UE mobility will be described with reference to FIG. 2. The procedure associated with second UE mobility is a procedure performed in a case that each apparatus is in the second state and that the UE_A 10 performs mobility across TAs. The present procedure hereinafter refers to a procedure associated with second UE mobility, and each procedure includes a tracking area update procedure. Furthermore, the NRnode_B 122 may be located in a TA that the UE_A 10 newly enters. Tracking area update performed in the present procedure may be performed with regard to the NRnode_A 122. Furthermore, in a case that each apparatus is in the second state, the present procedure may be a procedure that can be performed at any timing.

Next, each procedure will be described below. First, in the second state (S202), each apparatus performs a tracking area update procedure (S204). Note that the tracking area update procedure may be performed based on mobility of the UE_A 10 across TAs, or may be performed regularly. The procedure is not limited to the procedure described above, and the tracking area update procedure may be performed at any timing on a condition of having transitioned to the second state.

Each apparatus may exchange various pieces of request information in the tracking area update procedure. For example, in the tracking area update procedure, the UE_A 10 and the core network_B 190 may perform exchange of one or more pieces of identification information out of the 2nd identification information to the 4th identification information and the 21st identification information, and/or one or more pieces of identification information out of the 21st identification information to the 14th identification information and the 31st identification information to the 36th identification information.

Each apparatus may transition to the first state, based on completion of the tracking area update procedure. Note that the state to which each apparatus is transitioned based on completion of the tracking area update procedure is not limited to the state described above.

Through the procedures described above, each apparatus completes the present procedure. Note that each apparatus involved in the present procedure may transmit and/or receive each control message described in the present procedure to transmit and/or receive one or more pieces of identification information included in each control message, and may store each transmitted and/or received piece of identification information as a context. Furthermore, each apparatus may transition from the second state to the first state (S206), based on completion of the present procedure.

### 1.4.3. Overview of Tracking Area Update Procedure

An overview of a Tracking Area Update Procedure will be described. The present procedure hereinafter refers to a tracking area update procedure. The present procedure is a procedure to update location registration information of the UE_A 10 in the network (the access network, and/or the core network_B 190), and/or for the UE_A 10 to regularly notify the network of a state of the UE_A 10, and/or to update particular parameters related to the UE_A 10 in the network.

The UE_A 10 may initiate the present procedure in a case that the UE_A 10 performs mobility across TAs. In other words, the UE_A 10 may initiate the present procedure in a case that the UE_A 10 enters a TA different from a TA indicated in a held TA list. Furthermore, the UE_A 10 may initiate the present procedure in a case that the running timer expires. Furthermore, the UE_A 10 may initiate the present procedure in a case that a context of each apparatus needs to be updated due to release or invalidation of a PDU session and/or an EPS bearer. Furthermore, the UE_A 10 may initiate the present procedure in a case that a change occurs in capability information and/or preference concerning PDU session establishment of the UE_A 10. Furthermore, the UE_A 10 may initiate the present procedure regularly. Note that, not limited to these timings, the UE_A 10 can perform the present procedure at any timing on a condition that a PDU session has been established.

Furthermore, the UE_A 10 may initiate the present procedure in the first state or the second state, and may transition to the first state or the second state, based on completion of the present procedure. More specifically, in a case that the UE_A 10 initiates the present procedure while the UE_A 10 is in the first state, each apparatus may determine whether to transition to the first state or to transition to the second state, based on transmitted and/or received identification information. Then, each apparatus may transition to the state determined. Furthermore, in a case that the UE_A 10 initiates the present procedure while the UE_A 10 is in the second state, each apparatus may determine whether to transition to the first state or to transition to the second state, based on transmitted and/or received identification information. Then, each apparatus may transition to the state determined.

### 1.4.3.1. Example of Tracking Area Update Procedure

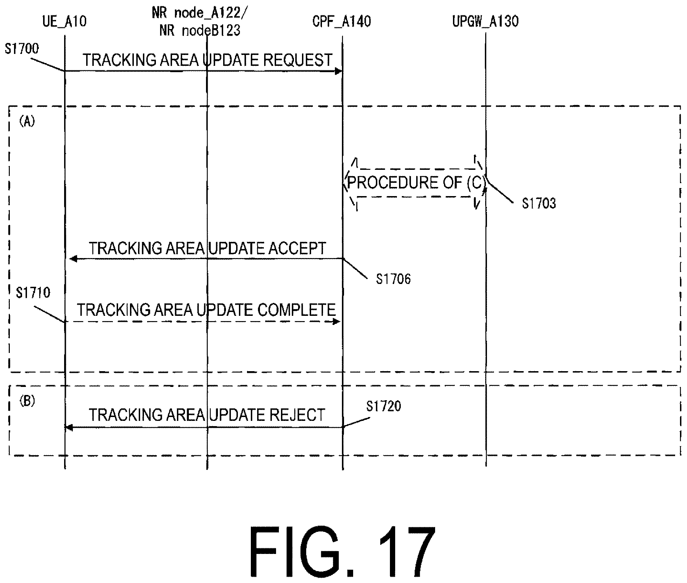

With reference to FIG. 17, an example of a procedure to perform a tracking area update procedure will be described. Each step of the present procedure will be described below. First, the UE_A 10 transmits a Tracking Area Updaterequest message to the CPF_A 140 via the NR node_A 122 (S1700), and initiates a tracking area update procedure.

Specifically, the UE_A 10 transmits an RRC message including a tracking area update request message to the NR node_A 122. The NR node_A 122, which has received the RRC message including the tracking area update request message, selects a CPF_A 140 as an NF or a common CP function of a routing destination of the tracking area update request message, and transmits an attach request message to the CPF_A 140. Here, the NR node_A 122 may select an NF or a common CP function of a routing destination, based on information included in the RRC message. The tracking area update request message may be a NAS message. Note that the NR node_A 122 may be an apparatus of an access network in a TA to which the UE_A 10 is currently connected. Therefore, the NR node A 122 may be an NR node_B 123. Instead of the NR node_A 122, the NR node_B 123 may perform transmission and/or reception of each message performed by the NR node_A 122 in the present procedure.

Here, the UE_A 10 may include at least one or more pieces of identification information out of the 1st identification information to the 4th identification information and the 21st identification information to the 22nd identification information in the tracking area update request message and/or in the RRC message, or may include these pieces of identification information in the tracking area update request message and/or in the RRC message to indicate a request of the UE_A 10.

Furthermore, the UE_A 10 may transmit the 1st identification information to the 4th identification information to indicate a type of a PDU session supported by the UE_A 10. More specifically, the UE_A 10 may transmit the 1st identification information and/or the 4th identification information indicating the first-type PDU session to indicate that the UE_A 10 supports the first-type PDU session.

Furthermore, the UE_A 10 may transmit the 2nd identification information and/or the 4th identification information indicating the second-type PDU session to indicate that the UE_A 10 supports the second-type PDU session.

Furthermore, the UE_A 10 may transmit the 3rd identification information and/or the 4th identification information indicating the third-type PDU session to indicate that the UE_A 10 supports the third-type PDU session.

Note that the UE_A 10 may include, in the tracking area update request message, the same identification information as the identification information exchanged in the attach procedure and/or in the PDU session establishment procedure to transmit the same identification information. The UE_A 10 may include, in the tracking area update request message, different identification information from the exchanged identification information to transmit the different identification information. In other words, the UE_A 10 may include, in the tracking area update procedure, identification information indicating a PDU session of the same type as the PDU session of a type of which establishment and/or use is determined in the attach procedure and/or in the PDU session establishment procedure to transmit the identification information indicating a PDU session of the same type. The UE_A 10 may include, in the tracking area update procedure, identification information indicating a PDU session of a different type from the determined PDU session of the type to transmit the identification information.

Furthermore, the UE_A 10 may transmit the 21st identification information to indicate that the current TA is the same as a TA to which the UE_A 10 was previously connected, or may indicate that the current TA is different from a TA to which the UE_A 10 was previously connected. Note that the UE_A 10 may associate the 1st identification information to the 7th identification information with the 21st identification information to transmit associated pieces of identification information.

Furthermore, the UE_A 10 may transmit the 22nd identification information to indicate that there is an activated PDU session, or to indicate that there is a suspended PDU session. Furthermore, the UE_A 10 may transmit the 21st identification information indicating a TA to which the UE_A 10 was previously connected, and/or the 22nd identification information indicating that there is a suspended PDU session to request resuming of the suspended PDU session.

Note that the UE_A 10 may determine which piece of identification information out of the 1st identification information to the 4th identification information and the 21st identification information to the 22nd identification information is to be included in the tracking area update request message, based on capability information of the UE_A 10, and/or a policy such as a UE policy, and/or preference of the UE_A 10. Note that determination performed by the UE_A 10 as to which piece of identification information is to be included in the tracking area update request message is not limited to the determination described above.

The CPF_A 140 receives the tracking area update request message, and performs first condition determination. In the first condition determination, the CPF_A 140 determines whether the first condition is true or false. The CPF_A 140 initiates the procedure of (A) in the present procedure in a case that the first condition is true, and initiates the procedure of (B) in the present procedure in a case that the first condition is false. Note that steps in a case that the first condition is false will be described later.

Steps in a case that the first condition is true, i.e., each step of the procedure of (A) in the present procedure, will be described below. The CPF_A 140 performs fourth condition determination, and initiates the procedure of (A) in the present procedure. In the fourth condition determination, the CPF_A 140 determines whether the fourth condition is true or false. The CPF_A 140 initiates the procedure of (C) in the present procedure in a case that the fourth condition is true, and omits the procedure of (C) in the present procedure in a case that the fourth condition is false (S1703).

Here, the first condition determination may be the same as the first condition determination in the attach procedure. The fourth condition determination is intended to determine whether or not there is a necessity of a modification and/or addition and/or delete procedure of a PDU session. Furthermore, the procedure of (C) in the present procedure may be a procedure for transmitting and/or receiving a message between apparatus in the network, and may be a procedure for updating and/or sharing a context. Details of the procedure will thus be omitted.

Here, the CPF_A 140 may include at least one or more pieces of identification information out of the 1st identification information to the 4th identification information and the 21st identification information in a message in the procedure of (C) in the present procedure, or may include these pieces of identification information in a message in the procedure of (C) in the present procedure to convey a request of the UE_A 10 to each apparatus.

Here, the CPF_A 140 may include at least one or more pieces of identification information out of the 11th identification information to the 14th identification information and the 31st identification information to the 36th identification information and/or the 18th identification information in a message in the procedure of (C) in the present procedure, or may include these pieces of identification information in a message in the procedure of (C) in the present procedure to deliver determination of the network concerning a request of the UE_A 10 to each apparatus.

The CPF_A 140 performs third condition determination after completion of the procedure of (C). Here, the third condition determination is intended to determine whether the CPF_A 140 accepts a request of the UE_A 10, and the third condition determination may be determined based on information received from any apparatus in the procedure of (C). In the third condition determination, the CPF_A 140 determines whether the third condition is true or false.

As for the procedure of (C) in the present procedure, in a case that the third condition is true, the CPF_A 140 transmits a Tracking Area Updateaccept message to the UE_A 10 via the NR node A 122 (S1706). In a case that the third condition is false, the CPF_A 140 initiates the procedure of (B) in the present procedure. The tracking area update accept message may include an appropriate accept cause. Note that the tracking area update accept message may be a response message in response to the tracking area update request message. However, the tracking area update accept message is not limited to this, and may be a message for accepting a request of a tracking area update.

Note that the CPF_A 140 may include the tracking area update accept message in an S1AP message (e.g., UEContext Modification Request and Downlink NAS Transport) to transmit the tracking area update accept message to the NR node_A 122. Furthermore, the tracking area update accept message may be a NAS message. The tracking area update accept message may be a response message in response to the tracking area update request message. Furthermore, the NR node_A 122 may include the tracking area update accept message received from the UE_A 10 in an RRC message to transmit the tracking area update accept message.

Here, the CPF_A 140 may include at least one or more pieces of identification information out of the 11th identification information to the 14th identification information and the 31st identification information to the 36th identification information in the tracking area update accept message, or may include these pieces of identification information in the tracking area update accept message to indicate that a request of the UE_A 10 has been accepted or to indicate a state of a PDU session after completion of the present procedure.

Furthermore, the CPF_A 140 may transmit the 11th identification information to the 14th identification information to indicate a type of a PDU session supported by the network. More specifically, the CPF_A 140 may transmit the 11th identification information and/or the 14th identification information indicating the first-type PDU session to indicate that a type of a PDU session allowed and/or supported by the network is the first-type PDU session.

Furthermore, the CPF_A 140 may transmit the 12th identification information and/or the 14th identification information indicating the second-type PDU session to indicate that a type of a PDU session allowed and/or supported by the network is the second-type PDU session.

Furthermore, the CPF_A 140 may transmit the 13th identification information and/or the 14th identification information indicating the third-type PDU session to indicate that a type of a PDU session allowed and/or supported by the network is the third-type PDU session.

Furthermore, the CPF_A 140 may transmit the 31st identification information to indicate one or multiple TAs that the network allowed the UE_A 10 to be connected to, or indicate an area in which the UE_A 10 can move without performing a new tracking area update procedure after completion of the present procedure.

Furthermore, the CPF_A 140 may associate the 11th identification information to the 14th identification information with the 31st identification information to transmit associated pieces of identification information, or may transmit these associated pieces of identification information to indicate that establishment of a PDU session of a type indicated by the 11th identification information to the 14th identification information is allowed and/or supported within a TA indicated by the 31st identification information.

Furthermore, the CPF_A 140 may transmit the 33rd identification information to the 36th identification information to indicate a state of a PDU session after completion of the present procedure. More specifically, the CPF_A 140 may transmit the 33rd identification information to indicate that there is a PDU session and/or an EPS bearer to be released, or to identify a PDU session and/or an EPS bearer to be released. Furthermore, the CPF_A 140 may transmit the 34th identification information to indicate that there is a PDU session and/or an EPS bearer to be suspended, or to identify a PDU session and/or an EPS bearer to be suspended.

Furthermore, the CPF_A 140 may transmit the 35th identification information to indicate that there is a PDU session and/or an EPS bearer to be resumed, or to identify a PDU session and/or an EPS bearer to be resumed. Furthermore, the CPF_A 140 may transmit the 36th identification information to indicate that there is a PDU session and/or an EPS bearer of which session continuity is to be performed, or to identify a PDU session and/or an EPS bearer of which session continuity is to be performed.

Furthermore, in a case that a PDU session of a type indicated by the 11th identification information to the 14th identification information is the second-type PDU session, the CPF_A 140 may further transmit the 32nd identification information, or may transmit the 32nd identification information to indicate a period of time in which suspension of a PDU session is valid in a case that the PDU session is suspended. Furthermore, in a case that there is a PDU session and/or an EPS bearer to be suspended, the CPF_A 140 may further transmit the 32nd identification information, or may transmit the 32nd identification information to indicate a period of time in which suspension of a PDU session and/or an EPS bearer is valid.

Note that the CPF_A 140 may determine which piece of identification information out of the 11th identification information to the 14th identification information and the 31st identification information to the 36th identification information is to be included in the tracking area update accept message, based on a received piece of identification information, and/or capability information of the network, and/or a policy such as an operator policy, and/or a state of the network. Note that determination performed by the CPF_A 140 as to which piece of identification information is to be included in the tracking area update accept message is not limited to the determination described above.

In a case that the UE_A 10 receives a tracking area update accept message, the UE_A 10 may transmit a Tracking Area Update complete message to the CPF_A 140 via the NR node_A 122 (S1710). Here, the tracking area update complete message may be a NAS message. The tracking area update complete message may be a response message in response to the tracking area update response message. Each apparatus completes the procedure of (A) in the present procedure, based on transmission and/or reception of the tracking area update complete message, and/or transmission and/or reception of the tracking area update accept message.

Next, each step of the procedure of (B) in the present procedure will be described. The CPF_A 140 transmits a Tracking Area Update reject message to the UE_A 10 via the NR node A 122 (S1720), to initiate the procedure of (B) in the present procedure. Furthermore, the UE_A 10 receives the tracking area update reject message, and recognizes that a request of the UE_A 10 has been rejected. Each apparatus completes the procedure of (B) in the present procedure, based on transmission and/or reception of the tracking area update reject message. The tracking area update reject message may include an appropriate reject cause. Note that the tracking area update reject message may be a NAS message. The tracking area update reject message may be a response message in response to the tracking area update request message. However, the tracking area update reject message is not limited to this, and may be a message for rejecting a request of a tracking area update.

Here, the CPF_A 140 may include the 18th identification information in the tracking area update reject message, or may include these pieces of identification information in the tracking area update reject message to indicate that a request of the UE_A 10 has been rejected.

Furthermore, the CPF_A 140 may transmit and/or receive the 18th identification information to recognize the reason why the tracking area update procedure has been rejected, to indicate processing that each apparatus is to perform after the tracking area update procedure, to perform the present procedure again with another condition, or to perform a procedure other than the present procedure.

Each apparatus completes the present procedure, based on completion of the procedure of (A) or (B) in the present procedure.

Furthermore, each apparatus may perform processing based on identification information transmitted and/or received in the present procedure, based on completion of the present procedure. For example, in a case that the UE_A 10 receives one or more pieces of identification information out of the 11th identification information to the 14th identification information and the 31st identification information to the 36th identification information, the UE_A 10 may recognize that a PDU session of a type indicated by each piece of identification information of the 11th identification information to the 14th identification information is allowed and/or supported in a TA indicated by the 31st identification information.

In a case that the UE_A 10 receives the 33rd identification information to the 36th identification information, the UE_A 10 may recognize that a part or all of states of a PDU session and/or an EPS bearer have been updated, or may recognize that a part or all of states of a PDU session and/or an EPS bearer need to be updated.

Specifically, in a case that the UE_A 10 receives the 33rd identification information, the UE_A 10 may recognize that a part or all of PDU sessions and/or EPS bearers have been released, or may invalidate and/or release a context related to a released PDU session and/or EPS bearer. Furthermore, in a case that the UE_A 10 receives the 34th identification information, the UE_A 10 may recognize that a part or all of PDU sessions and/or EPS bearers have been suspended, with being unreleased. Furthermore, in a case that the UE_A 10 receives the 35th identification information, the UE_A 10 may recognize that a part or all of PDU sessions and/or EPS bearers have been restored from a suspended state. Furthermore, in a case that the UE_A 10 receives the 36th identification information, the UE_A 10 may recognize that session continuity of a part or all of PDU sessions and/or EPS bearers has been performed, with being unreleased. In a case that there is a suspended PDU session and/or EPS bearer, the UE_A 10 may start running of the first timer, or may configure a value indicated by the 32nd identification information as a value of the first timer.

In a case that each apparatus transmits and/or receives the 35th identification information, each apparatus may transition from the first state to the second state. Furthermore, in a case that each apparatus transmits and/or receives the 36th identification information, each apparatus may transition from the second state to the first state. Note that a condition on which each apparatus transitions to the first state or to the second state is not limited to the condition described above.

The previously described first condition determination, and/or the third condition determination, and/or the fourth condition determination may be performed based on identification information, and/or subscriber information, and/or an operator policy included in the tracking area update request message. Conditions with which true or false of the first condition, and/or the third condition, and/or the fourth condition is determined may not be limited to the previously described conditions.

For example, the first condition, and/or the third condition, and/or the fourth condition may be true in a case that the UE_A 10 requests a tracking area update, and the network allows the request. The first condition, and/or the third condition, and/or the fourth condition may be false in a case that the UE_A 10 requests a tracking area update, and the network does not allow the request. Furthermore, the first condition, and/or the second condition, and/or the third condition may be false in a case that the network of the connection destination of the UE_A 10 and/or an apparatus in the network does not support a tracking area update which the UE_A 10 requests.

### 2. Modifications

A program running on an apparatus according to the present invention may serve as a program that controls a Central Processing Unit (CPU) and the like to cause a computer to operate in such a manner as to realize the functions of the embodiment according to the present invention. Programs or information handled by the programs are temporarily stored in a volatile memory such as a Random Access Memory (RAM), a non-volatile memory such as a flash memory, a Hard Disk Drive (HDD), or another storage device system.

Note that a program for realizing such functions of the embodiment according to the present invention may be recorded on a computer-readable recording medium. The functions may be realized by causing a computer system to read the program recorded on the recording medium for execution. It is assumed that the "computer system" herein refers to a built-in computer system of the apparatus, and the computer system includes an operating system and hardware components such as a peripheral device. The "computer-readable recording medium" may be any of a semiconductor recording medium, an optical recording medium, a magnetic recording medium, a medium dynamically retaining a program for a short period of time, or any other computer-readable recording medium.

Each functional block or various characteristics of the apparatus used in the above-described embodiment may be implemented or performed in an electric circuit, for example, an integrated circuit or multiple integrated circuits. An electric circuit designed to perform the functions described in the present specification may include a general-purpose processor, a Digital Signal Processor (DSP), an Application Specific Integrated Circuit (ASIC), a Field Programmable Gate Array (FPGA), or other programmable logic devices, discrete gates or transistor logic, discrete hardware components, or a combination thereof. The general-purpose processor may be a microprocessor, or may be a processor of a known type, a controller, a micro-controller, or a state machine instead. The above-mentioned electric circuit may include a digital circuit, or may include an analog circuit. In a case that with advances in semiconductor technology, a circuit integration technology appears that replaces the present integrated circuits, one or multiple aspects of the present invention are also possible to use a new integrated circuit based on the technology.

Note that the invention of the present patent application is not limited to the above-described embodiment. In the embodiment, apparatuses have been described as an example, but the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

The embodiment of the present invention has been described in detail above referring to the drawings, but the specific configuration is not limited to the embodiment and includes, for example, an amendment to a design that falls within the scope that does not depart from the gist of the present invention. Various modifications are possible within the scope of the present invention defined by claims, and embodiments that are made by suitably combining technical means disclosed according to the different embodiments are also included in the technical scope of the present invention. A configuration in which constituent elements, described in the embodiment and having mutually the same effects, are substituted for one another is also included in the technical scope of the present invention.

### Reference Signs List

1 Mobile communication system
5 PDN_A
10 UE_A
30 PGW_A
35 SGW_A
40 MME_A
42 SGSN_A
45 eNB_A
46 SCEF_A
50 HSS_A
60 PCRF_A
80 E-UTRAN_A
120 NextGen RAN_A
122 NR node_A
123 NR node_B
125 WLAN ANc
126 WAG_A
130 UPGW_A
140 CPF_A
190 Core network_B

## Claims

1. A terminal apparatus comprising:
a transmission and/or reception unit configured to perform, between the terminal apparatus and an apparatus included in a core network,
a PDU session establishment procedure, and
a tracking area update procedure in a case that the terminal apparatus moves from a tracking area A to a tracking area B; and
a controller configured to
establish a PDU session, based on completion of the PDU session establishment procedure, and
suspend the PDU session and further run a timer for managing a state of the PDU session, based on completion of the tracking area update procedure, wherein
the tracking area A is a tracking area included in a tracking area list held by the terminal apparatus before the tracking area update procedure is performed, and
the tracking area B is a tracking area different from the tracking area A, and is a tracking area not included in the tracking area list.

2. The terminal apparatus according to claim 1, wherein
in a case that the terminal apparatus moves from the tracking area B to the tracking area A while the PDU session is suspended, the transmission and/or reception
transmits a tracking area update request message to the apparatus included in the core network, and
receives a tracking area update accept message including information A from the apparatus included in the core network,
the controller
resumes the PDU session in a case that the controller receives the information A from the apparatus included in the core network, and
releases the PDU session in a case that the timer expires, and
the information A is information for indicating that the PDU session is to be resumed.

3. The terminal apparatus according to claim 1 or 2, wherein
the transmission and/or reception further performs an attach procedure,
in the attach procedure, the tracking area list and information B are received from the apparatus included in the core network, and
the information B is information for indicating that the core network supports the PDU session.

4. The terminal apparatus according to any one of claims 1 to 3, wherein
in the PDU session establishment procedure, the transmission and/or reception receives information C from the apparatus included in the core network, and
the information C is information for indicating that the PDU session is a suspendable PDU session.

5. The terminal apparatus according to any one of claims 1 to 4, wherein
in the tracking area update procedure, the transmission and/or reception receives a tracking area list different from the tracking area list, and a value of the timer, from the apparatus included in the core network.

6. An apparatus included in a core network, the apparatus comprising:
a transmission and/or reception unit configured to perform, between the apparatus included in the core network and a terminal apparatus,
a PDU session establishment procedure and a tracking area update procedure; and
a controller configured to
establish a PDU session between the core network and the terminal apparatus, based on completion of the PDU session establishment procedure, and
suspend the PDU session and further run a timer for managing a state of the PDU session, based on completion of the tracking area update procedure.

7. The apparatus included in the core network according to claim 6, wherein
in a case that the transmission and/or reception receives a tracking area update request message from the terminal apparatus while the PDU session is suspended, the transmission and/or reception transmits a tracking area update accept message including information A to the terminal apparatus,
the controller
resumes the PDU session in a case that the controller transmits information for indicating that the PDU session is to be resumed to the terminal apparatus, and
releases the PDU session in a case that the timer expires, and
the information A is information for indicating that the PDU session is to be resumed.

8. The apparatus included in the core network according to claim 6 or 7, wherein the transmission and/or reception further performs an attach procedure,
in the attach procedure,
a tracking area list and information B are transmitted to the terminal apparatus, and
the information B is information for indicating that the core network supports the PDU session.

9. The apparatus included in the core network according to any one of claims 6 to 8, wherein
in the PDU session establishment procedure, the transmission and/or reception transmits information C to the terminal apparatus, and
the information C is information for indicating that the PDU session is a suspendable PDU session.

10. The apparatus included in the core network according to any one of claims 6 to 9, wherein
in the tracking area update procedure, the transmission and/or reception
transmits a tracking area list different from the tracking area list, and a value of the timer, to the terminal apparatus.

11. A communication control method of a terminal apparatus, the communication control method comprising, between the terminal apparatus and an apparatus included in a core network, the steps of:
performing a PDU session establishment procedure;
establishing a PDU session, based on completion of the PDU session establishment procedure;
further performing a tracking area update procedure in a case of movement from a tracking area A to a tracking area B;
suspending the PDU session, based on completion of the tracking area update procedure; and
running a timer for managing a state of the PDU session, wherein
the tracking area A is a tracking area included in a tracking area list held by the terminal apparatus before the tracking area update procedure is performed, and
the tracking area B is a tracking area different from the tracking area A, and is a tracking area not included in the tracking area list.

12. The communication control method of a terminal apparatus according to claim 11, wherein
in a case that the terminal apparatus moves from the tracking area B to the tracking area A while the PDU session is suspended, the communication control method comprises the steps of:
transmitting a tracking area update request message to the apparatus included in the core network;
receiving a tracking area update accept message including information A from the apparatus included in the core network; and
resuming the PDU session,
in a case that the timer expires, the communication control method comprises the step of releasing the PDU session, and
the information A is information for indicating that the PDU session is to be resumed.

13. The communication control method of a terminal apparatus according to claim 11 or 12, further comprising the steps of:
performing an attach procedure; and
in the attach procedure,
receiving the tracking area list and information B, from the apparatus included in the core network, wherein
the information B is information for indicating that the core network supports the PDU session.

14. The communication control method of a terminal apparatus according to any one of claims 11 to 13, further comprising the step of
in the PDU session establishment procedure,
receiving information C from the apparatus included in the core network, wherein
the information C is information for indicating that the PDU session is a suspendable PDU session.

15. The communication control method of a terminal apparatus according to any one of claims 11 to 14, further comprising the step of
in the tracking area update procedure,
receiving a tracking area list different from the tracking area list, and a value of the timer, from the apparatus included in the core network.

16. A communication control method of an apparatus included in a core network, the communication control method comprising, between the apparatus included in the core network and a terminal apparatus, the steps of:
performing a PDU session establishment procedure;
establishing a PDU session between the core network and the terminal apparatus, based on completion of the PDU session establishment procedure;
performing a tracking area update procedure;
suspending the PDU session, based on completion of the tracking area update procedure; and
running a timer for managing a state of the PDU session.

17. The communication control method of an apparatus included in a core network according to claim 16, comprising the steps of,
in a state of the PDU session being suspended, and in a case that a tracking area update request message is further received from the terminal apparatus
transmitting information for indicating that the PDU session is to be resumed to the terminal apparatus; and
resuming the PDU session, and
in a case that the timer expires,
releasing the PDU session.

18. The communication control method of an apparatus included in a core network according to claim 16 or 17, further comprising the steps of:
performing an attach procedure; and
in the attach procedure,
transmitting a tracking area list, and information for indicating that the core network supports the PDU session, to the terminal apparatus.

19. The communication control method of an apparatus included in a core network according to any one of claims 16 to 18, further comprising the step of
in the PDU session establishment procedure,
transmitting information for indicating that the PDU session is a suspendable PDU session, to the terminal apparatus.

20. The communication control method of an apparatus included in a core network according to any one of claims 16 to 19, further comprising the step of
in the tracking area update procedure,
transmitting a tracking area list different from the tracking area list, and a value of the timer, to the terminal apparatus.
